# EUROPÄISCHE PATENTANMELDUNG

(11) **EP 4 257 225 A1**
(43) Veröffentlichungstag der Anmeldung: **11.10.2023**
(21) Anmeldenummer: 23165226.4
(22) Anmeldetag: 29.03.2023
(51) Int. Cl.: B01D 46/04, B01D 46/42, B01D 46/44, B01D 46/71

(54) **VERFAHREN ZUR REINIGUNG EINES FILTERSYSTEMS IN EINEM TROCKNER**

(30) Priorität: 08.04.2022 DE 102022108651
(71) Anmelder: Gausling Engineering GmbH & Co. KG, 48619 Heek (DE)
(72) Erfinder: Gausling, Ludger, 48619 Heek (DE)
(74) Vertreter: Beckord & Niedlich Patentanwälte PartG mbB

(57) **Zusammenfassung**

Die Erfindung betrifft ein Verfahren zur Reinigung eines Filtersystems (1) eines Trockners (2), wobei das Filtersystem (1) zumindest einen Schlauchfilter (10) aufweist und wobei zum Ablösen von Filtrationspartikeln (11), die an einer Rohgasseite (12) des Schlauchfilters (10) anhaften und die durch eine Filterung von Rohgas (ROG) mit einer relativen Feuchtigkeit von wenigstens 80 % erhalten werden, eine Reingasseite (13) des Schlauchfilters (10) mit einem Gasdruckstoß (GDS) beaufschlagt wird. Die Erfindung betrifft weiterhin ein Verfahren zur Trocknung eines Trocknungsguts (TG) sowie ein Filtersystem (1) für einen Trockner (2) und einen Trockner (2) mit einem Filtersystem (1).

## Beschreibung

Die Erfindung betrifft ein Verfahren zur Reinigung eines Filtersystems eines Trockners, welches Filtersystem zumindest einen Schlauchfilter aufweist und ein Verfahren zur Trocknung eines Trocknungsguts. Die Erfindung betrifft weiterhin ein Filtersystem für einen Trockner, welches Filtersystem zumindest einen Schlauchfilter aufweist und einen Trockner mit einem Filtersystem.

Trockner der eingangs genannten Art werden in industriellen Anlagen üblicherweise dazu eingesetzt, um fließfähige und/oder schüttfähige z.B. biologische Materialien mittels warmer Trocknungsluft zu trocknen. Als Trocknungsgut können beispielsweise Klärschlamm, Gärreste oder andere Arten von Biomasse verwendet werden.

Bekannte Trockner haben typischerweise einen Behälter für das zu trocknende Trocknungsgut und Mittel zum Bereitstellen und Fördern von Trocknungsluft, z.B. in Form eines Trocknungsluftstroms, sowie einen Filter zur Reinigung des Trocknungsluftstroms. Das Trocknungsgut befindet sich während der Trocknung z.B. auf einem in dem Trocknungsbehälter angeordneten Spalt- oder Siebboden. Der Trocknungsbehälter kann einen Mischer aufweisen, um das Trocknungsgut zu mischen und in Umlauf zu halten.

Der Trocknungsbehälter hat üblicherweise eine Kammer, die zwischen dem Siebboden und einem Boden des Trocknungsbehälters ausgebildet ist. In diese Kammer kann erwärmte Trocknungsluft im Betrieb so eingeführt werden, dass die Trocknungsluft durch den Siebboden und das darauf lagernde Trocknungsgut hindurchströmt, um dieses zu trocknen. Nach dem Durchströmen des Trocknungsguts kann die Trocknungsluft in eine weitere Kammer des Trockners eintreten, die üblicherweise oberhalb des Trocknungsguts liegt und die einen Filter für die Trocknungsluft aufweisen kann. Das getrocknete Trocknungsgut kann, z.B. nach Erreichen eines bestimmten Feuchtigkeitsgehalts, beispielsweise mittels einer Förderschnecke aus dem Trockner entfernt werden.

Die Trocknungsluft kann beim Durchströmen des Trocknungsguts mehr oder weniger stark mit Partikeln, d.h. Verschmutzungspartikeln, angereichert werden. Um die Trocknungsluft vor der Abgabe an die Atmosphäre möglichst umfassend zu reinigen, werden in bekannten Trocknern häufig Schlauchfilter eingesetzt, die als Großfilter konzipiert sind und mehrere Meter lang sein können. Derartige Schlauchfilter werden üblicherweise in radialer Richtung durchströmt, z.B. von außen nach innen, wobei sich in Folge einer Durchströmung eines Filtermaterials eines Schlauchfilters die in der Trocknungsluft mitgeführten Verschmutzungspartikel an einer Außenseite des Schlauchfilters ablagern bzw. an dem Filtermaterial außen anhaften. Durch die Ablagerung von Verschmutzungspartikeln kann sich auf der Außenseite, die auch als Rohgasseite bezeichnet wird, im Betrieb ein Filterkuchen bilden.

Durch den Filterkuchen kann die Durchströmbarkeit des jeweiligen Schlauchfilters beeinträchtigt werden, wobei im Betrieb die wirksame freie Oberfläche des Schlauchfilters verringert werden kann. Das kann dazu führen, dass eine Filterleistung des Schlauchfilters im Betrieb nachlässt. Entsprechend ist in vielen Anwendungsfällen eine regelmäßige Reinigung der Schlauchfilter in einem Trockner erforderlich.

Je nach Betriebsart des Trockners, insbesondere in Abhängigkeit des Trocknungsguts, können Schlauchfilter durch eine Art Rückspülung gereinigt werden, wobei ein Gas entgegen einer im Filterbetrieb üblichen Strömungsrichtung durch das Filtermaterial geführt wird. Auf diese Weise können beispielsweise trockene Stäube von der Rohgasseite eines Schlauchfilters abgelöst werden.

Allerdings sind bekannte Rückspülverfahren regelmäßig nicht zur Reinigung von Schlauchfiltern geeignet, über die Trocknungsluft mit einer relativ hohen Feuchtigkeit gereinigt wird, z.B. bei der Trocknung von Klärschlamm oder Gärresten. Insbesondere bei einer relativen Feuchtigkeit der Trocknungsluft von mehr als 80 % können die am Filtermaterial anhaftenden Partikel eine zusammenhängende Masse bilden und relativ stark an der Rohgasseite des Schlauchfilters anhaften. Solche Verschmutzungspartikel, die aus einer feuchten Trocknungsluft abgetrennt wurden und die beim Anhaften am Schlauchfilter selbst feucht sind und/oder eine feuchte, z.B. klebrige oder schmierige Masse ausbilden, können durch ein gewöhnliches Rückspülverfahren nicht ohne Weiteres vom Schlauchfilter entfernt werden. In solchen Fällen kann der Schlauchfilter beispielsweise mechanisch gereinigt werden. Eine bekannte Methode ist eine manuelle Reinigung mittels Klöppeln.

Eine manuelle Reinigung kann nachteilig sein, da die einzelnen Schlauchfilter eines Trockners beispielsweise zunächst für einen Bediener zugänglich gemacht werden müssen. Je nach Größe und Anzahl der Schlauchfilter in einem Trockner kann die manuelle Reinigung zeitaufwendig und arbeitsintensiv sein. Weiterhin kann das Filtermaterial der Schlauchfilter durch die manuelle Reinigung beansprucht werden, wodurch sich die Standzeit der Schlauchfilter verkürzen kann. In Abhängigkeit des Trocknungsguts können die am Schlauchfilter anhaftenden Verschmutzungspartikel auch ein Gesundheitsrisiko darstellen.

Es ist Aufgabe der vorliegenden Erfindung, ein Verfahren zur Reinigung eines Filtersystems in einem Trockner, ein Verfahren zur Trocknung von Trocknungsgut sowie ein Filtersystem für einen Trockner und einen Trockner bereitzustellen, mit denen zumindest einige der genannten Nachteile verringert oder vermieden werden können.

Diese Aufgabe wird durch ein Verfahren gemäß Patentanspruch 1 und ein Verfahren nach Patentanspruch 7 sowie durch ein Filtersystem nach Patentanspruch 9 und einen Trockner nach Patentanspruch 14 gelöst.

Die Erfindung betrifft ein Verfahren zur Reinigung eines Filtersystems eines Trockners, insbesondere ein Filtersystem in einem Trockner. Der Trockner kann nach der eingangs genannten Art realisiert sein und kann insbesondere zur Trocknung von fließfähigen und/oder schüttfähigen Materialien mittels eines warmen Gases ausgebildet sein.

Das Filtersystem weist zumindest einen Schlauchfilter auf, vorzugsweise zwei oder mehr separate Schlauchfilter. Ein jeweiliger Schlauchfilter hat zumindest einen Stützkorb sowie ein außen auf dem Stützkorb aufliegendes Filtergewebe. Das Filtergewebe kann vorzugsweise schlauchartig ausgebildet sein und kann einen Filterboden und eine sich daran anschließende überwiegend zylinderartige Schlauchfilterwand ausbilden. Das Filtergewebe bzw. Filtermaterial kann im Filterbetrieb des Filtersystems von einem Gas durchströmt werden, wobei ein bestimmter herauszufilternder Anteil des Gases durch das Filtergewebe zurückgehalten wird. Das zu filternde Gas wird als Rohgas bezeichnet, wobei das Rohgas bei der Trocknung eines Trocknungsguts im Trockner erhalten wird und Partikel aufweist, insbesondere Verschmutzungspartikel. Das Rohgas kann vorzugsweise Trocknungsluft sein, in der Partikel mitgeführt werden.

Ein jeweiliger Schlauchfilter ist bevorzugt so ausgebildet, dass ein rohgasseitiges Ende geschlossen ist, z.B. ein Filterboden. Vorzugsweise ist ein gegenüberliegendes reingasseitiges Ende offen ausgebildet. Bevorzugt kann das reingasseitige Ende eine Schlauchfilteröffnung ausbilden. Vorzugsweise ist im Bereich der Schlauchfilteröffnung kein Filtergewebe angeordnet. Insbesondere kann der jeweilige Schlauchfilter so ausgebildet und/oder so in dem Filtersystem angeordnet sein, dass zur Filterung von Rohgas, d.h. im Filterbetrieb, eine Außenseite des Filtergewebes, auch bezeichnet als Rohgasseite, mit Rohgas beaufschlagt wird. Nach einem Durchtritt durch das Filtergewebe kann ein gefiltertes Reingas in einen Innenraum des Schlauchfilters eintreten, welcher Innenraum vorzugsweise durch den Stützkorb ausgebildet ist. Das gefilterte Reingas kann über die Schlauchfilteröffnung aus dem Schlauchfilter austreten. Der jeweilige Schlauchfilter kann zur Filterung vorzugsweise im Wesentlichen radial durchströmt werden.

Im Filterbetrieb wird die Außenseite des jeweiligen Schlauchfilters mit einem partikelbeladenen Rohgas beaufschlagt, wobei die herauszufilternden Partikel an der Rohgasseite anhaften. Die aus dem Rohgas herausgefilterten Partikel, die als Filtrationspartikel bezeichnet werden, können einen Filterkuchen ausbilden, der die Rohgasseite zumindest abschnittsweise, ggf. auch im Wesentlichen vollständig, bedecken kann.

Bei dem erfindungsgemäßen Verfahren, auch bezeichnet als Reinigungsverfahren, wird zum Ablösen von Filtrationspartikeln, z.B. ein Filterkuchen, die an einer Rohgasseite des Schlauchfilters anhaften und die durch eine vorherige Filterung von Rohgas mit einer relativen Feuchtigkeit von wenigstens 80 % erhalten werden bzw. erhalten wurden, eine Reingasseite des Schlauchfilters, die der Rohgasseite gegenüberliegt, zumindest einmalig mit einem Gasdruckstoß beaufschlagt. Bevorzugt kann in einem Innenraum des Schlauchfilters ein kurzzeitiger intensiver Druckstoß eines Reinigungsgases erzeugt werden (als Gasdruckstoß), wobei schlagartig bzw. impulsartig die im Filterbetrieb vorgesehene Strömungsrichtung umgekehrt wird.

Der Gasdruckstoß kann bevorzugt so erzeugt werden, dass ein Druckstoß bestimmter Stärke auf zumindest einen Bereich der Reingasseite einwirkt. Vorzugsweise wird der Gasdruckstoß so erzeugt, dass dadurch zumindest bereichsweise eine Auslenkung und/oder eine Aufweitung des Filtergewebes erfolgt, insbesondere in Folge einer Dehnung des Filtergewebes.

Vorteilhafterweise können durch das erfindungsgemäße Verfahren auch Filtersysteme von Trocknern, die zur Filterung von vergleichsweise feuchten Rohgasen eingesetzt werden, nach der Art eines Jet-Pulse-Verfahrens gereinigt werden. Das erfindungsgemäße Reinigungsverfahren ermöglicht es, dass Schlauchfilter, die in einer Betriebsatmosphäre mit einer relativen Feuchtigkeit von 80 % oder mehr betrieben werden, vergleichsweise einfach und schnell, beispielsweise über einen Druckluftimpuls, gereinigt werden können.

Vorteilhafterweise können durch das Verfahren, und zwar ohne direktes manuelles Zutun, Schlauchfilter gereinigt werden, deren Filtergewebe und/oder deren Filterkuchen eine hohe relative Feuchtigkeit von z.B. 80 % oder mehr hat. Das Verfahren kann gewinnbringend zum Ablösen von Filtrationspartikeln eingesetzt werden, die aus einer Filterung von Rohgas stammen, das bei der Trocknung von biologischen Materialien wie Klärschlamm, Gärresten oder anderer Biomasse erhalten wurde.

Bei einem erfindungsgemäßen Verfahren zur Trocknung eines Trocknungsguts wird in einem Schritt ein, vorzugsweise erwärmtes, Prozessgas in Form eines Prozessgasstroms bereitgestellt. Das Prozessgas kann ein bestimmtes, z.B. reines Gas oder ein bestimmtes Gemisch unterschiedlicher Gase sein. Es ist jedoch bevorzugt, dass das Prozessgas (Umgebungs-)Luft ist, die in Form eines Trocknungsluftstroms bereitgestellt wird. Vorzugsweise wird die Trocknungsluft zur Trocknung des Trocknungsguts aktiv auf eine bestimmte Temperatur beheizt. Beispielsweise kann die Trocknungsluft auf eine Temperatur von zumindest 85 °C, vorzugsweise zumindest 90 °C, bevorzugt auf etwa 95 °C, erwärmt werden.

In einem weiteren Schritt wird der erzeugte Prozessgasstrom, vorzugsweise der erwärmte Trocknungsluftstrom, durch ein zu trocknendes Trocknungsgut hindurchgeführt, um das Trocknungsgut zu trocknen. Beim Hindurchführen durch das Trocknungsgut wird ein mit Partikeln angereichertes Rohgas erhalten. Das bedeutet, dass die Trocknungsluft beim Durchströmen des Trocknungsguts mit Partikeln, die aus dem Trocknungsgut stammen, angereicht wird, wobei das Rohgas erhalten wird. Vorzugsweise kann das zu trocknende Trocknungsgut Klärschlamm, Gärreste oder eine andere Art von Biomasse umfassen. Das Trocknungsgut kann fließfähige und/oder schüttfähige Materialien umfassen.

In einem weiteren Schritt wird das so erhaltene Rohgas in ein Filtersystem eines Trockners mit zumindest einem Schlauchfilter so eingebracht, dass eine Rohgasseite des Schlauchfilters mit dem Rohgas beaufschlagt wird, wobei das Rohgas zur Filterung bzw. während der Filterung eine relative Feuchtigkeit, vorzugsweise eine relative Luftfeuchtigkeit, von wenigstens 80 % hat. Zur Filterung kann das Rohgas den (jeweiligen) Schlauchfilter vorzugsweise im Wesentlichen radial durchströmen. Das auf die Rohgasseite auftreffende Rohgas kann durch das Filtermaterial des Schlauchfilters hindurchtreten, wobei eine aus dem Rohgas abzutrennende Fraktion, z.B. Partikel einer bestimmen Mindestgröße, vom Filtermaterial zurückgehalten wird, so dass im Filterbetrieb Filtrationspartikel an der Rohgasseite des Schlauchfilters anhaften.

In einem weiteren Schritt erfolgt ein intermittierendes Ablösen der an der Rohgasseite anhaftenden Filtrationspartikel durch ein zumindest einmaliges Beaufschlagen einer Reingasseite des Schlauchfilters, die einem Innenraum des Schlauchfilters zugewandt ist, mit einem Gasdruckstoß in Abhängigkeit einer definierten Bedingung. Das Ablösen der Filtrationspartikel erfolgt zeitweilig aussetzend bzw. wiederkehrend. Vorzugsweise kann ein kurzzeitiger Druckluftstoß im Innenraum des Schlauchfilters erzeugt werden, sobald ein bestimmter Betriebsparameter (als Bedingung) erreicht ist.

Vorzugsweise kann das Ablösen der Filtrationspartikel mittels eines erfindungsgemäßen Reinigungsverfahrens erfolgen. Bevorzugt kann das erfindungsgemäße Reinigungsverfahren, insbesondere auch dessen vorteilhafte Weiterbildungen, in das erfindungsgemäße Trocknungsverfahren integriert sein. Beispielsweise kann in dem Trocknungsverfahren vorgesehen sein, dass ein bestimmter Schlauchfilter mittels eines Gasdruckstoßes gereinigt wird, sobald eine definierte Bedingung für diesen Schlauchfilter erfüllt ist. Das Trocknungsverfahren und/oder das Reinigungsverfahren können vorzugsweise mittels einer Steuereinheit durchgeführt bzw. gesteuert werden, insbesondere in einem automatisierten Prozess.

Ein erfindungsgemäßes Filtersystem für einen Trockner weist zumindest einen, vorzugsweise zwei oder mehr, jeweils rohgasseitig verschlossene Schlauchfilter auf. Das Filtersystem ist so ausgebildet, dass zum Ablösen von Filtrationspartikeln, z.B. ein Filterkuchen, die an einer Rohgasseite des Schlauchfilters anhaften und die durch eine vorherige Filterung von Rohgas mit einer relativen (Luft-)Feuchtigkeit von wenigstens 80 % erhalten werden bzw. erhalten wurden, eine Reingasseite des Schlauchfilters zumindest einmalig mit einem Gasdruckstoß beaufschlagt wird. Insbesondere ist das Filtersystem zur Verwendung in einem erfindungsgemäßen Reinigungsverfahren und/oder in einem erfindungsgemäßen Trocknungsverfahren ausgebildet.

Ein erfindungsgemäßer Trockner, der auch als Trocknungsanlage bezeichnet wird, weist als Baugruppen zumindest eine Prozessgasbereitstellungseinheit zum Bereitstellen eines, vorzugsweise erwärmten, Prozessgases in Form eines Prozessgasstroms auf sowie einen Trocknungsbehälter zum Trocknen eines Trocknungsguts und ein erfindungsgemäßes Filtersystem. Vorzugsweise kann wenigstens eine Baugruppe, insbesondere alle Baugruppen, als Module aufgebaut sein. Details zum Trockner werden später beschrieben.

Vorteilhafterweise liegt sowohl dem erfindungsgemäßen Reinigungsverfahren als auch dem Trocknungsverfahren, dem Filtersystem und dem Trockner dieselbe erfinderische Idee zu Grunde. Die allgemeine erfinderische Idee besteht darin, dass ein Filtersystem eines Trockners, über das im Filterbetrieb Rohgase mit einer hohen relativen Feuchtigkeit von wenigstens 80 % gereinigt werden, mittels eines Gasdruckstoßes gereinigt werden kann. Folglich ergeben sich die anhand des Reinigungsverfahrens beschriebenen Vorteile in entsprechender Weise auch für das Trocknungsverfahren, das Filtersystem und den Trockner.

Weitere, besonders vorteilhafte Ausgestaltungen und Weiterbildungen der Erfindung ergeben sich aus den abhängigen Ansprüchen sowie der nachfolgenden Beschreibung, wobei die unabhängigen Ansprüche einer Anspruchskategorie auch analog zu den abhängigen Ansprüchen und Ausführungsbeispielen einer anderen Anspruchskategorie weitergebildet sein können und insbesondere auch einzelne Merkmale verschiedener Ausführungsbeispiele bzw. Varianten zu neuen Ausführungsbeispielen bzw. Varianten kombiniert werden können.

Das Reinigungsverfahren kann vorzugsweise zum Ablösen von an der Rohgasseite des Schlauchfilters anhaftenden Filtrationspartikeln eingesetzt werden, die durch eine vorherige Filterung von Rohgas erhalten wurden, das während der Filterung, insbesondere beim Auftreffen auf das Filtermaterial, eine relative (Luft-)Feuchtigkeit von etwa 85 %, vorzugsweise von etwa 90 %, bevorzugt von etwa 95 %, besonders bevorzugt von etwa 97 % oder mehr, hat. In der Beschreibung wird, ohne eine Beschränkung darauf, davon ausgegangen, dass zur Trocknung erwärmte Luft aus der Umgebung eines Trockners eingesetzt wird. Entsprechend kann das Rohgas erwärmte Umgebungsluft sein, in der (Verschmutzungs-)Partikel des Trocknungsguts mitgeführt werden.

Das Filtersystem kann so ausgestaltet sein, dass ein Rohgas, das auf verschiedene Teilbereiche desselben Schlauchfilters auftrifft, in den jeweiligen Teilbereichen eine unterschiedliche relative Feuchtigkeit hat. Beispielsweise kann das Rohgas, das auf einen dem Trocknungsgut zugewandten Teil eines Schlauchfilters auftrifft, einen höheren Feuchtigkeitsgehalt haben, als Rohgas, das auf einen vom Trocknungsgut abgewandten Teil desselben Schlauchfilters trifft. Entsprechend kann das aufzureinigende Rohgas zumindest in einem bestimmten Teilbereich, vorzugsweise in allen Bereichen, eines jeweiligen Schlauchfilters eine relative Feuchtigkeit von mehr als 80 % haben. Die Erfindung wird, ohne eine Beschränkung darauf und sofern nicht anders erwähnt, anhand eines einzelnen Schlauchfilters beschrieben, wobei ein Filtersystem üblicherweise eine Vielzahl von entsprechenden Schlauchfiltern haben kann.

In dem Reinigungsverfahren kann zur Erzeugung des Gasdruckstoßes ein, vorzugsweise komprimiertes, Reinigungsgas derart in den (jeweiligen) Schlauchfilter eingebracht werden, dass durch das einströmende Reinigungsgas ein bestimmtes Volumen an Sekundärluft von außerhalb des Schlauchfilters in den Schlauchfilter eingeführt wird. Bevorzugt kann ein bestimmtes Volumen eines Reinigungsgases über die Schlauchfilteröffnung impulsartig bzw. stoßartig so in den Innenraum des Schlauchfilters eingebracht werden, dass in Folge einer Strömungsbewegung des einströmenden Reinigungsgases ein bestimmtes Volumen an Sekundärluft von außerhalb des Schlauchfilters in den Innenraum des Schlauchfilters mitgerissen wird.

Vorzugsweise kann ein Volumen der Sekundärluft, das durch die schlagartige Strömungsbewegung des Reinigungsgases in den Schlauchfilter eingebracht wird, in etwa gleich groß sein wie ein Volumen des einströmenden Reinigungsgases. Bevorzugt kann über das einströmende Reinigungsgas in etwa das doppelte Volumen an Sekundärluft in den Schlauchfilter eingeführt werden. Das bedeutet, dass über das schlagartig einströmende Reinigungsgas ein bestimmtes Volumen Sekundärluft angesaugt und in den Schlauchfilter eingeführt werden kann. Unter Sekundärluft wird ein Gas(-gemisch) verstanden, das außerhalb des Schlauchfilters und im Bereich einer Reingasseite des Schlauchfilters angeordnet ist. Vorzugsweise kann die Sekundärluft ein Reingas sein, das zuvor über das Filtersystem gereinigt wurde und das noch im Filtersystem befindlich ist.

Das Reinigungsgas kann ein bestimmtes, z.B. reines Gas oder ein Gemisch unterschiedlicher Gase sein. Es ist jedoch bevorzugt, dass als Reinigungsgas komprimierte (Umgebungs-)Luft verwendet wird. Das Reinigungsgas kann vorzugsweise mit einem Druck von etwa 6 bar bereitgestellt werden. Insbesondere kann das Reinigungsgas mit einem Druck von etwa 6 bar stoßartig aus einer Injektionsdüse des Filtersystems abgegeben werden. Grundsätzlich kann das Reinigungsgas auch mit einem höheren Druck oder mit einem geringeren Druck bereitgestellt werden. Vorteilhafterweise kann bei einem Druck des Reinigungsgases von etwa 6 bar, insbesondere in Kombination mit einem Freistrahl, der über eine definierte Strecke außerhalb eines Schlauchfilters verläuft, eine besonders effektive Reinigung des Schlauchfilters erreicht werden.

Das Volumen des eingebrachten Reinigungsgases und/oder das Volumen der mitgeführten Sekundärluft kann vorzugsweise in Abhängigkeit der Ausgestaltung des zugeordneten Schlauchfilters bestimmt werden. Rein beispielhaft könnte zur Reinigung eines Schlauchfilters mit einer (inneren) Länge von etwa 2000 mm und einem (inneren) Durchmesser von etwa 140 mm ein Reinigungsgasvolumen von etwa 8,2 Litern (L) mit einem Druck von etwa 6 bar über eine dem (jeweiligen) Schlauchfilter zugeordnete Injektionsdüse stoßartig abgegeben werden. Durch die stoßartige Strömungsbewegung des Reinigungsgasvolumens kann beispielsweise ein Sekundärluftvolumen von etwa 16,4 L angesaugt und gemeinsam mit dem Reinigungsgas in den Schlauchfilter eingedüst werden. Insbesondere in Abhängigkeit des Sekundärluftvolumens kann im Innenraum des Schlauchfilters temporär ein mehr oder weniger großer Überdruck gebildet werden. Je nach Ausgestaltung des Filtersystems, kann das Gasgemisch annähernd mit Schallgeschwindigkeit in den Schlauchfilter eingebracht werden. Das Verhältnis zwischen dem Reinigungsgasvolumen und dem Sekundärluftvolumen kann z.B. über die konstruktive Ausgestaltung des Filtersystems bestimmt werden, wie später beschrieben wird.

Die Sekundärluft wird vorzugsweise so in den Schlauchfilter eingeführt und/oder so darin mit dem (einströmenden) Reinigungsgas verwirbelt, insbesondere in einem bestimmten Verwirbelungsbereich, dass zumindest ein Bereich der Reingasseite mit einem Gasgemisch beaufschlagt wird, das Sekundärluft und Reinigungsgas umfasst. Bevorzugt kann die Beaufschlagung der Reingasseite mit diesem Gasgemisch einen Gasdruckstoß erzeugen. In Folge der Beaufschlagung der Reingasseite mit diesem Gasgemisch kann das Filtermaterial des Schlauchfilters wenigstens in dem beaufschlagten Abschnitt aufgeweitet und/oder ausgelenkt werden.

Vorzugsweise können das Reinigungsgas und/oder die Sekundärluft so in den Schlauchfilter eingebracht werden, dass eine Verwirbelung und/oder eine Durchmischung von Reinigungsgas und Sekundärluft in einem bestimmten Teilbereich des Schlauchfilterinnenraums erfolgt. Vorzugsweise kann das Verfahren so durchgeführt werden, dass sich ein (temporärer) Durchmischungs- bzw. Verwirbelungsbereich ausgehend von einer Schlauchfilteröffnung über zumindest etwa ein Drittel einer (inneren) Länge des Schlauchfilters erstreckt. Bevorzugt kann sich ein Verwirbelungsbereich etwa über die Hälfte der Länge des Schlauchfilters, insbesondere eine Länge des Schlauchfilterinnenraums, erstrecken. Ein Verwirbelungsbereich kann insbesondere dadurch gekennzeichnet sein, dass in diesem Bereich des Innenraums temporär ein Überdruck ausgebildet ist bezogen auf andere Bereiche des Innenraums, die außerhalb des Verwirbelungsbereichs liegen.

Weiterhin kann in einem Verwirbelungsbereich (vorübergehend) eine Durchmischung von Reinigungsgas und Sekundärluft erfolgen und/oder eine turbulente Strömung anliegen und/oder eine Aufwärtsbewegung von Gasmolekülen in Richtung der Schlauchfilteröffnung erfolgen.

Vorteilhafterweise kann in dem Reinigungsverfahren die mitgerissene Sekundärluft dazu genutzt werden, um den Impuls des Gasdruckstoßes erheblich zu verstärken bezogen auf das eingesetzte Reinigungsgasvolumen. Der erzeugte Druckimpuls ist in erster Linie vom Druck und vom Volumen des in den Schlauchfilter einströmenden Gases abhängig, wobei durch die - quasi passiv - mitgeführte Sekundärluft das Gasvolumen im Schlauchfilterinnenraum und damit der Druckimpuls auf effiziente Weise vergrößert werden kann. Folglich kann zumindest in einem solchen Abschnitt des Schlauchfilters, in den die Sekundärluft einströmt, durch das kurzzeitige Vorhandensein eines zusätzlichen Volumens an Sekundärluft ein besonders kräftiger und/oder ausgeprägter Druckstoß erzeugt werden. Somit kann die Reinigungswirkung verbessert werden, wobei eine vergleichsweise geringe Menge an Reinigungsgas bereitgestellt werden muss.

Da in dem Verfahren die Sekundärluft besonders tief in den Schlauchfilter eingebracht werden kann, können große Teile der Reingasseite mit dem durch Verwirbelung erzeugten Gasgemisch beaufschlagt werden, wobei ein besonders kräftiger Druckstoß auf diese Teilbereiche einwirkt. Entsprechend kann der vorteilhafte Effekt eines durch Sekundärluft verstärkten Impulses zur effektiven Reinigung von großen Teilen des Filtermaterials eines jeweiligen Schlauchfilters genutzt werden. Beispielsweise kann das Verfahren so erfolgen, dass Sekundärluft in etwa bis zur Hälfte in den Schlauchfilter eindringt, wobei der Schlauchfilter dann etwa zur Hälfte (bezogen auf die Längserstreckung) durch einen besonders ausgeprägten Druckstoß aufgeweitet wird.

Es wäre prinzipiell auch möglich, dass zumindest Teile der Sekundärluft den Innenraum des (jeweiligen) Schlauchfilters im Wesentlichen vollständig durchströmen.

Es wäre auch möglich, dass das Reinigungsgas und die Sekundärluft so in den Schlauchfilter eingebracht werden, dass zumindest Teile des Reinigungsgases und/oder der Sekundärluft zuerst auf einem Boden des Schlauchfilters aufschlagen und darüber in Richtung der gegenüberliegenden Schlauchfilteröffnung und/oder in Richtung der Schlauchfilterwand gelenkt werden. Dann kann der Schlauchfilter zumindest abschnittsweise durch einen Druckstoß eines umgelenkten Gasstroms aufgeweitet werden, insbesondere durch einen Gasrücklauf.

Je nach Ausgestaltung des Filtersystems kann es bevorzugt sein, dass die Sekundärluft, wie beschrieben, etwa bis zur Hälfte der Länge in den jeweiligen Schlauchfilter eindringt, wobei in diesem (Verwirbelungs-)Bereich dann ein ausgeprägter kurzzeitiger Gasüberdruck entsteht, infolgedessen die zugeordneten Abschnitte der Reingasseite mit einem starken Druckstoß beaufschlagt werden. Die Bereiche der Schlauchfilterwand, auf die der Druckstoß wirkt, insbesondere das Filtergewebe in diesen Bereichen, können durch den Druckstoß aus einer im Filterbetrieb üblichen Position ausgelenkt und vorzugsweise auch gedehnt werden. Entsprechend kann ein Umfang des Schlauchfilters zumindest in den beaufschlagten Bereichen kurzzeitig und schlagartig vergrößert werden. Durch eine solche abrupte Auslenkung und/oder Dehnung bzw. Aufweitung des Filtermaterials können anhaftende Filtrationspartikel von den zugeordneten Bereichen der Rohgasseite besonders effektiv abgelöst werden.

Um den Schlauchfilter entlang seiner gesamten Längserstreckung möglichst gründlich zu reinigen, kann der Gasdruckstoß vorzugsweise so erzeugt werden, dass durch den auf die Reingasseite wirkenden Gasdruckstoß eine Druckwelle im Filtergewebe erzeugt wird, die sich (auch) in Richtung eines Filterbodens ausbreitet.

Bevorzugt kann in dem Reinigungsverfahren in einem ersten Bereich des Schlauchfilters ein Verwirbelungsbereich erzeugt werden, wobei ein darüber erzeugter Druckstoß im Wesentlichen nur auf das Filtergewebe direkt einwirkt, das den Verwirbelungsbereich umgibt. Vorzugsweise kann das Filtergewebe in diesem ersten Bereich in Folge des Gasdruckstoßes schlagartig ausgelenkt und/oder gedehnt werden.

Bevorzugt kann das Reinigungsverfahren so erfolgen, dass durch den Impuls des Gasdruckstoßes, der auf die Reingasseite in dem ersten Bereich trifft, eine Druckwelle im Filtermaterial in einem zweiten, anderen Bereich erzeugt wird. Die Druckwelle kann sich ausgehend vom Verwirbelungsbereich im Filtermaterial fortpflanzen, insbesondere auch in Richtung des Schlauchfilterbodens. Es wird darauf hingewiesen, dass die beiden Bereiche vorzugsweise ineinander übergehen können. Beispielsweise kann sich der Impuls des Gasdruckstoßes mit zunehmendem Abstand von der Schlauchfilteröffnung, z.B. annähernd kontinuierlich, abschwächen. Entsprechend kann mit zunehmendem Abstand von der Schlauchfilteröffnung der Einfluss des Gasdruckstoßes auf die Reinigungswirkung abnehmen, wobei das Ablösen der Filtrationspartikel dann verstärkt über die Druckwelle im Filtermaterial erfolgen kann.

Vorteilhafterweise können in dem Verfahren auch besonders lange Schlauchfilter effektiv gereinigt werden, die z.B. eine Länge von bis zu 4 Metern haben. Durch das Mitführen von Sekundärluft kann im Verwirbelungsbereich ein besonders starker Impuls eines Gasdruckstoßes erzeugt werden. Dadurch können einerseits die Bereiche der Filterwand, die direkt mit dem Gasdruckstoß beaufschlagt werden, effektiv gereinigt werden, insbesondere indem die Filterwand dort schlagartig aufgeweitet wird. Andererseits kann eine ausreichend starke Druckwelle erzeugt werden, die vorzugsweise das gesamte Filtermaterial der Länge nach durchläuft, so dass eine effektive Reinigung im Wesentlichen aller Bereiche des Schlauchfilters möglich ist. Insbesondere können auch Bereiche der Filterwand gereinigt werden, die von einer Schlauchfilteröffnung maximal beabstandet sind.

Besonders bevorzugt kann das Verfahren zur Reinigung des Filtersystems eines Trockners, welches Filtersystem zumindest einen, vorzugsweise rohgasseitig verschlossenen, Schlauchfilter aufweist, so durchgeführt werden, dass zum Ablösen von an der Rohgasseite des Schlauchfilters anhaftenden Filtrationspartikeln bzw. eines Filterkuchens die gegenüberliegende Reingasseite des Schlauchfilters zumindest einmalig mit einem Gasdruckstoß beaufschlagt wird.

Zur Erzeugung des Gasdruckstoßes kann ein, vorzugsweise komprimiertes, Reinigungsgas(-volumen) in Form eines nach der Erzeugung zunächst über eine definierte Strecke außerhalb des Schlauchfilters verlaufenden Freistrahls in den Schlauchfilter eingebracht werden. Mit anderen Worten kann ein definiertes Volumen des Reinigungsgases, vorzugsweise stoßartig, ausgehend von einer Injektionsdüse über einen freien Bereich einer bestimmten Länge in den Schlauchfilter eingedüst werden.

Unter einem Freistrahl wird gemäß der allgemeinen Definition eine Strömung aus einer Düse in die freie Umgebung ohne Wandbegrenzung verstanden. Das aus der Düse ausströmende (Reinigungs-)Gas und das Gas der Umgebung haben üblicherweise unterschiedliche Geschwindigkeiten. Zwischen dem ausströmenden (Reinigungs-)Gas und dem Gas der Umgebung entsteht eine Scherschicht, aus der sich der Freistrahl entwickelt. Das Gas aus der Umgebung kann angesaugt und mitgerissen werden.

Vorteilhafterweise macht sich das Reinigungsverfahren den Effekt zu Nutze, dass ein bestimmtes Volumen Sekundärluft einzig durch die Erzeugung eines Freistrahls in den Schlauchfilter eingebracht werden kann. Somit können die Vorteile, die zuvor bezüglich der Sekundärluft beschrieben wurden, auf technisch einfache Weise dadurch erreicht werden, dass das Reinigungsgas in Form eines Freistrahls bereitgestellt und/oder in Form eines Freistrahls über die Schlauchfilteröffnung in den Innenraum des Schlauchfilters eingebracht wird. Dadurch wird - quasi automatisch - ein bestimmtes Volumen Sekundärluft in den Schlauchfilter mitgesaugt. Es wird darauf hingewiesen, dass diese vorteilhafte Weiterbildung des Verfahrens, d.h. die Erzeugung eines Freistrahls, einen eigenständigen Teilaspekt der Erfindung darstellt. Entsprechend kann dieser Teilaspekt sowohl in Kombination mit dem hier näher beschriebenen Verfahren und dessen vorteilhaften Weiterbildungen verwendet werden, als auch in anderen Verfahren zur Reinigung von Filtersystemen.

Entsprechend kann ein bevorzugtes Filtersystem für einen Trockner mit zumindest einem, vorzugsweise rohgasseitig verschlossenen, Schlauchfilter so ausgebildet sein, dass zum Ablösen von an der Rohgasseite des Schlauchfilters anhaftenden Filtrationspartikeln, bzw. eines Filterkuchens, die gegenüberliegende Reingasseite des Schlauchfilters zumindest einmalig mit einem Gasdruckstoß beaufschlagt wird.

Das Filtersystem weist vorzugsweise zumindest eine Injektionsdüse auf, die einer Schlauchfilteröffnung gegenüberliegt und durch eine definierte Strecke von der Schlauchfilteröffnung beabstandet ist. Die Injektionsdüse kann dazu ausgebildet sein, um ein, vorzugsweise komprimiertes, Reinigungsgas(-volumen) in Form eines Freistrahls in den Schlauchfilter einzubringen, insbesondere zur Erzeugung eines Gasdruckstoßes. Die Injektionsdüse kann vorzugsweise einen im Wesentlichen konstanten Strömungsquerschnitt für Reinigungsgas haben (bezogen auf ihre Längserstreckung in Strömungsrichtung), d.h. sie kann bevorzugt eine einfache geradlinige Bohrung bzw. Durchtrittsbohrung sein. Bevorzugt ist das Filtersystem dazu ausgebildet, um zur Erzeugung des Gasdruckstoßes ein bestimmtes Reinigungsgas(-volumen) in Form eines nach der Erzeugung durch die Injektionsdüse zunächst über eine definierte Strecke außerhalb des Schlauchfilters verlaufenden Freistrahls in den Schlauchfilter einzubringen. Es wird darauf hingewiesen, dass diese vorteilhafte Weiterbildung des Filtersystems einen eigenständigen Teilaspekt der Erfindung darstellt, der sowohl in Kombination mit dem hier beschriebenen Filtersystem und dessen vorteilhaften Weiterbildungen, als auch in anderen Filtersystemen verwendet werden kann.

Der Freistrahl kann in dem Reinigungsverfahren vorzugsweise so erzeugt werden, dass die definierte Strecke, die der Freistrahl außerhalb des Schlauchfilters, d.h. zwischen einer jeweiligen Injektionsdüse und einer zugeordneten Schlauchfilteröffnung, durchläuft, zumindest etwa 60 mm, vorzugsweise zumindest etwa 80 mm, bevorzugt zumindest etwa 90 mm, weiter bevorzugt zumindest etwa 100 mm, weiter bevorzugt zumindest etwa 110 mm, besonders bevorzugt zumindest etwa 120 mm, ist. Insbesondere kann die definierte Strecke etwa 128 mm sein. Die definierte Strecke, die der Freistrahl außerhalb des Schlauchfilters durchläuft, kann vorzugsweise höchstens etwa 300 mm, bevorzugt höchstens etwa 200 mm, insbesondere höchstens etwa 150 mm, sein.

Die definierte Strecke, die der Freistrahl vor einem Eintritt in den Schlauchfilter durchströmt, kann vorzugsweise ein frei von Reinigungsgas durchströmter Bereich zwischen einer jeweiligen Injektionsdüse und einer zugeordneten Schlauchfilteröffnung sein. Bevorzugt kann sich die definierte Strecke, die der Freistrahl außerhalb des Schlauchfilters durchläuft, auf den Teil eines Freistrahls beziehen, der im Wesentlichen parallel zu einer Längserstreckung des Schlauchfilters strömt. Mit anderen Worten kann die definierte Strecke, die der Freistrahl vor einem Eintritt in den Schlauchfilter durchströmt, eine kürzeste Strecke sein zwischen einem Ort der Bildung des Freistrahls und einem Ort des Eintretens in den Schlauchfilter.

Entsprechend kann das Filtersystem vorzugsweise so ausgebildet sein, dass ein Abstand zwischen der jeweiligen Injektionsdüse und der jeweils zugeordneten Schlauchfilteröffnung zumindest etwa 60 mm, vorzugsweise zumindest etwa 80 mm, bevorzugt zumindest etwa 90 mm, weiter bevorzugt zumindest etwa 100 mm, weiter bevorzugt zumindest etwa 110 mm, besonders bevorzugt zumindest etwa 120 mm, ist. Insbesondere kann der Abstand zwischen der Injektionsdüse und der zugeordneten Schlauchfilteröffnung etwa 128 mm sein. Der Abstand zwischen der Injektionsdüse und der zugeordneten Schlauchfilteröffnung kann vorzugsweise höchstens etwa 300 mm, bevorzugt höchstens etwa 200 mm, insbesondere höchstens etwa 150 mm, sein. Vorteilhafterweise können durch einen Abstand zwischen einer Injektionsdüse und einer zugewandten Schlauchfilteröffnung von zumindest etwa 60 mm und/oder höchstens etwa 300 mm bzw. durch einen Freistrahl dieser Länge, insbesondere in Kombination mit einem komprimierten Reinigungsgas, das zur Erzeugung des Freistrahls einen Druck von etwa 6 bar hat, an der Rohgasseite des Schlauchfilters anhaftende Filtrationspartikel, die durch eine Filterung von Rohgas mit einer relativen Feuchtigkeit von wenigstens 80 % erhalten werden, besonders effektiv abgelöst werden.

Der Freistrahl kann vorzugsweise so erzeugt werden, dass ein Durchmesser des Freistrahls beim Eintritt in den Schlauchfilter, insbesondere beim Durchströmung der Schlauchfilteröffnung, im Wesentlichen gleich ist zu einem bestimmten Innendurchmesser des Schlauchfilters. Vorzugsweise kann der Durchmesser des Freistrahls beim Eintritt in den Schlauchfilterinnenraum etwa 30 % kleiner, bevorzugt etwa 50 % kleiner, insbesondere etwa 55 %, kleiner sein als ein bestimmter Innendurchmesser des Schlauchfilters. Der Durchmesser des Freistrahls kann zum Zeitpunkt des Eintritts in den Schlauchfilter im Wesentlichen kreisrund sein.

Sofern der Schlauchfilter eine optionale Venturi-Düse umfasst, kann sich der zugeordnete Innendurchmesser des Schlauchfilters auf einen Durchmesser der Venturi-Düse beziehen, z.B. ein Durchmesser einer Eintrittsöffnung der Venturi-Düse. Sofern eine Venturi-Düse nicht vorgesehen ist, kann der zugeordnete Innendurchmesser des Schlauchfilters ein Innendurchmesser der Schlauchfilteröffnung sein oder ein Durchmesser der zylinderartigen Filterwand. Der Schlauchfilter kann, abgesehen von einer Venturi-Düse, entlang seiner Längserstreckung im Wesentlichen einen konstanten (Innen-)Durchmesser haben.

Vorteilhafterweise kann über eine bestimmte Länge des Freistrahls und/oder über einen bestimmten Durchmesser des Freistrahls beim Eintritt in den Schlauchfilter der Impuls des Gasdruckstoßes weiter verstärkt werden. Zusätzlich kann der Gasdruckstoß über die beiden zuvor genannten Parameter an eine bestimmte Filtergeometrie und/oder an eine Beschaffenheit eines abzureinigenden Filterkuchens angepasst werden, um die Reinigungswirkung weiter zu verbessern. Es hat sich beispielsweise gezeigt, dass der Impuls eines Gasdruckstoßes mit zunehmendem Abstand zwischen einer Injektionsdüse und einer Schlauchfilteröffnung (innerhalb der zuvor genannten Grenzen) verstärkt werden kann. Entsprechend kann der Abstand zwischen der Injektionsdüse und der Schlauchfilteröffnung einen erheblichen Einfluss auf den Impuls des Gasdruckstoßes im Schlauchfilter haben.

Weiterhin kann durch ein bestimmtes Verhältnis zwischen dem Durchmesser des Freistrahls und dem Durchmesser des Schlauchfilters erreicht werden, dass der eigentliche (ausgebildete) Freistrahl, also das Reinigungsgas, erst nach dem Durchströmen der Schlauchfilteröffnung auf die Filterwand oder die Venturi-Düse auftrifft. Das bedeutet, dass der Freistrahl erst eine bestimmte Strecke stromabwärts der Schlauchfilteröffnung auf die Filterwand oder auf die Venturi-Düse aufschlägt. Dadurch kann erreicht werden, dass ein bestimmtes Volumen an Sekundärluft, z.B. ein möglichst großes Volumen, über die Schlauchfilteröffnung einströmen kann, z.B. an einem Außenrand des Freistrahls oder im Bereich einer Übergangszone des Freistrahls.

In dem Reinigungsverfahren und/oder in dem Trocknungsverfahren kann vorgesehen sein, dass der Gasdruckstoß in Abhängigkeit eines bestimmten Differenzdrucks erzeugt wird. Der Differenzdruck kann vorzugsweise definiert sein durch eine Differenz eines Drucks des Rohgases auf der Rohgasseite und eines Drucks des Reingases auf der Reingasseite eines Schlauchfilters.

Der Differenzdruck eines bestimmten Schlauchfilters kann eine Bedingung für die Erzeugung eines Gasdruckstoßes in dem Schlauchfilter sein. Vorzugsweise kann ein Gasdruckstoß in einem bestimmten Schlauchfilter erzeugt werden, sobald ein bestimmter Differenzdruck (als Bedingung) bei diesem Schlauchfilter im Filterbetrieb erreicht und/oder überschritten ist. Der Differenzdruck eines jeweiligen Schlauchfilters kann vorzugsweise separat bestimmt werden, insbesondere in Echtzeit.

Entsprechend ist das Filtersystem vorzugsweise so ausgebildet, dass einem jeweiligen Schlauchfilter ein Drucksensor zugeordnet ist, um einen Differenzdruck zwischen der Rohgasseite und der Reingasseite des jeweiligen Schlauchfilters separat bestimmen zu können. Die Drucksensoren sind vorzugsweise mit einer Steuereinheit verbunden, wobei die jeweiligen Messwerte der Steuereinheit zugeführt werden können.

In dem Trocknungsverfahren kann vorgesehen sein, dass ein Differenzdruck eines jeweiligen Schlauchfilters eines Filtersystems im Filterbetrieb kontinuierlich überwacht wird. Vorzugsweise kann bei Erreichen und/oder Überschreiten eines vorgegebenen Differenzdrucks an einem Schlauchfilter ein Gasdruckstoß in diesem Schlauchfilter erzeugt werden. Die Erzeugung eines Gasdruckstoßes in einem bestimmten Schlauchfilter kann vorzugsweise durch eine Steuereinheit gesteuert werden.

Es wäre grundsätzlich möglich, dass die jeweiligen Schlauchfilter separat gereinigt werden können. Beispielsweise kann das Filtersystem so ausgebildet sein, dass gezielt nur ein bestimmter Schlauchfilter gereinigt wird, bei dem definierter Differenzdruck erreicht und/oder überschritten ist.

Es ist jedoch bevorzugt, dass in dem Reinigungsverfahren und/oder in dem Trocknungsverfahren mehrere Schlauchfilter im Wesentlichen gleichzeitig gereinigt werden. Vorzugsweise können mehrere, z.B. 8, Schlauchfilter zu einer Schlauchfiltereinheit zusammengefasst sein, wobei diese Schlauchfilter gemeinsam gereinigt werden. Vorzugsweise können in dem Trocknungsverfahren die Differenzdrücke der jeweiligen Schlauchfilter separat erfasst werden, wobei die gesamte Schlauchfiltereinheit gereinigt wird, sobald an nur einem Schlauchfilter ein bestimmter Differenzdruck erreicht und/oder überschritten wird. Dadurch kann die Konstruktion des Filtersystems vereinfacht werden.

Vorzugsweise kann die Reinigung eines einzelnen Schlauchfilters und/oder einer Schlauchfiltereinheit im laufenden Filterbetrieb des Trockners erfolgen. Das bedeutet, dass zumindest an einem Schlauchfilter eines Filtersystems das beschriebene Reinigungsverfahren durchgeführt werden kann, während zumindest ein anderer Schlauchfilter desselben Filtersystems im Filterbetrieb ist. Vorzugsweise kann das Trocknungsverfahren so durchgeführt werden, dass eine erste Schlauchfiltereinheit gemäß dem Reinigungsverfahren gereinigt wird, wobei zumindest eine andere Schlauchfiltereinheit zeitgleich bestimmungsgemäß Rohgas filtert. Das bedeutet, dass die jeweiligen Schlauchfilter und/oder die jeweiligen Schlauchfiltereinheiten sequentiell gereinigt werden können. Insbesondere können benachbarte Schlauchfiltereinheiten sequentiell gereinigt werden.

Es ist bevorzugt, dass in dem Verfahren ein einziger Differenzdruck für eine Vielzahl von Schlauchfiltern gemeinsam bestimmt wird. Vorzugsweise kann eine Differenz zwischen einem Druck des Rohgases auf der Rohgasseite aller Schlauchfilter und einem Druck des Reingases auf der Reingasseite aller eingesetzten Schlauchfilter bestimmt werden. Sobald ein bestimmter Differenzdruck erreicht und/oder überschritten ist, kann eine Reinigung aller Schlauchfilter initiiert werden, vorzugsweise mittels der Steuereinheit. Bevorzugt können die jeweiligen Schlauchfiltereinheiten, insbesondere benachbarte Schlauchfiltereinheiten, sequentiell gereinigt werden.

Es ist auch möglich, dass das Filtersystem mehrere Abschnitte mit jeweils einer Anzahl von Schlauchfiltereinheiten umfasst, die separat von Rohgas durchströmt werden. Dann könnte für jeden dieser Abschnitte ein separater Differenzdruck bestimmt werden. Entsprechend kann eine Reinigung der Schlauchfiltereinheiten eines bestimmten Abschnitts initiiert werden, sobald der Differenzdruck in diesem Abschnitt einen definierten Wert erreicht und/oder überschreitet.

Es wird darauf hingewiesen, dass eine Bedingung zur Initiierung einer intermittierenden Reinigung eines jeweiligen Schlauchfilters auch ein anderer Betriebsparameter des Filtersystems sein kann. Beispielsweise kann als Bedingung ein definiertes Zeitintervall vorgesehen sein, wobei eine periodische Reinigung der Schlauchfilter erfolgen kann.

Das Filtersystem kann vorzugsweise so ausgebildet sein, dass zumindest ein Schlauchfilter, vorzugsweise ein jeweiliger Schlauchfilter, eine Venturi-Düse aufweist. Die Venturi-Düse kann zumindest im Bereich der Schlauchfilteröffnung angeordnet sein. Das bedeutet, dass die Venturi-Düse dann die Schlauchfilteröffnung ausbilden kann. Entsprechend können das Reinigungsgas und die Sekundärluft über die Venturi-Düse (als Schlauchfilteröffnung) in den Schlauchfilter einströmen. Besonders bevorzugt kann die Venturi-Düse auch in den Innenraum des Schlauchfilters hineinragen. Vorteilhaftweise kann durch eine Venturi-Düse die Reinigungswirkung weiter verbessert werden. Die Venturi-Düse kann eine Strömungsengstelle im Schlauchfilter ausbilden, wobei ein Rückstrom von Reinigungsgas und Sekundärluft durch die Venturi-Düse verlangsamt werden kann, so dass der Gasdruckstoß verstärkt werden kann.

Das Filtersystem kann vorzugsweise zwei oder mehr separate Schlauchfilter haben, insbesondere eine Vielzahl von Schlauchfiltern. Gemäß einer bevorzugten Ausführungsform kann das Filtersystem beispielhaft 224 separate Schlauchfilter bzw. Filterschläuche haben. Die Schlauchfilter können parallel zueinander und im Wesentlichen vertikal bzw. in Lotrichtung angeordnet sein. Ein rohgasseitiges Ende der jeweiligen Schlauchfilter kann in Richtung zum Trocknungsgut weisen, wobei das gegenüberliegende reingasseitige Ende, d.h. die Schlauchfilteröffnung, entgegen der Lotrichtung vom Trocknungsgut weg weist. Vorzugsweise sind jeweils acht Schlauchfilter zu einer Schlauchfiltereinheit zusammengefasst.

Das Filtersystem kann zumindest ein Injektionsrohr, auch als Düsenstock, Reinigungslanze oder Verteilerrohr bezeichnet, aufweisen, wobei das Injektionsrohr zumindest eine Injektionsdüse zum Einbringen des, vorzugsweise komprimierten, Reinigungsgases in einen zugeordneten Schlauchfilter aufweist. Bevorzugt kann das Filtersystem zwei oder mehr, insbesondere separat steuerbare, Injektionsrohre aufweisen. Gemäß einer bevorzugten Ausführungsform kann das Filtersystem 28 separat steuerbare, längliche Düsenstöcke aufweisen.

Der jeweilige Düsenstock kann zwei oder mehr separat ausgebildete Injektionsdüsen haben. Bevorzugt ist das jeweilige Injektionsrohr so ausgebildet, dass jeweils eine Injektionsdüse einem bestimmten Schlauchfilter zugeordnet ist, um zumindest ein Volumen des Reinigungsgases in den Schlauchfilter einzubringen. Eine Injektionsdüse kann vorzugsweise eine kreisrunde Austrittsöffnung für Reinigungsgas aus der Injektionslanze sein mit einem bestimmten Durchmesser. Die Reinigungslanze selbst kann eine Rohrleitung mit einem runden Querschnitt sein, wobei eine Injektionsdüse dann eine (Durchtritts-)Bohrung in einer Wandung des Rohrs sein kann.

Optional kann eine Injektionsdüse in Form eines Düsenstutzens ausgebildet sein. Ein solcher Düsenstutzen kann einen Fortsatz bilden, der über die Injektionslanze hinausragt. Auch eine Kombination der beiden Düsenformen in einem Filtersystem ist möglich.

Gemäß einer bevorzugten Ausführungsform kann ein jeweiliges Injektionsrohr acht Injektionsdüsen haben. Vorzugsweise ist dann jeweils ein Injektionsrohr einer Schlauchfiltereinheit zugeordnet, wobei jeweils eine Injektionsdüse und jeweils eine Schlauchfilteröffnung im Wesentlichen konzentrisch angeordnet sind. Das Injektionsrohr ist vorzugsweise oberhalb der Schlauchfilter angeordnet, d.h. dass die Injektionsdüsen den Schlauchfilteröffnungen zugewandt sind. Mit anderen Worten kann der Düsenstock vorzugsweise an einem vom Trocknungsgut abgewandten Ende der Schlauchfilter angeordnet sein.

Die Schlauchfilter einer jeweiligen Schlauchfiltereinheit sind vorzugsweise in einer Reihe angeordnet, z.B. entlang einer Geraden. Vorzugsweise sind in einem Filtersystem die einzelnen Reihen annähernd parallel zueinander angeordnet. Bei einer bevorzugten Ausführungsform umfasst das Filtersystem demnach 28 parallele Reihen (als Schlauchfiltereinheiten) mit jeweils 8 Schlauchfiltern. Vorzugsweise ist jeder Reihe aus Schlauchfiltern bzw. jeder Schlauchfiltereinheit jeweils eine Reinigungslanze zugeordnet. Das bedeutet, dass vorzugsweise auch die Reinigungslanzen parallel zueinander angeordnet sind.

Die jeweiligen Reinigungslanzen sind vorzugsweise an einem Ende mit einem Tanksystem verbunden, das Teil des Filtersystems ist. Das Tanksystem kann zumindest einen Tank zum Vorhalten des komprimierten Reinigungsgases haben. Weiterhin kann das Tanksystem zumindest eine Kompressoreinheit zur Bereitstellung des komprimierten Reinigungsgases in dem (jeweiligen) Tank haben.

Bei einer bevorzugten Ausführungsform umfasst das Tanksystem sieben separate Tanks. Der jeweilige Tank kann rein beispielhaft ein Volumen von etwa 16,4 L haben, wobei ein Druck des komprimierten Reinigungsgases etwa 6 bar ist. Vorzugsweise sind jedem Tank vier oben beschriebene Reinigungslanzen zugeordnet. Bevorzugt kann jeder Reinigungslanze bzw. jedem Düsenstock ein separat steuerbares Ventil zugeordnet sein, z.B. ein Magnetventil, um ein bestimmtes Volumen des komprimierten Gases aus dem Tank in die jeweilige Reinigungslanze einzubringen. Das Ventil kann Teil des Tanksystems sein. Rein beispielhaft kann bei einer Schlauchfiltereinheit mit 8 zuvor beschriebenen Schlauchfiltern für einen Abreinigungsimpuls das Ventil für eine Dauer von etwa 0,4 Sekunden geöffnet werden. Es wird darauf hingewiesen, dass der jeweilige Tank auch ein anderes Volumen haben kann, wobei auch die Öffnungszeit des Ventils kürzer oder länger sein kann.

Bei einer bevorzugten Ausführungsform kann das Tanksystem außerhalb eines im Wesentlichen luftdichten Gehäuses des Filtersystems angeordnet sein. Das Gehäuse kann vorzugsweise ein isolierter Container sein. Das Gehäuse selbst wird im Filterbetrieb von Rohgas und Reingas durchströmt und enthält zumindest die Schlauchfilter und die Reinigungslanzen.

Um die Schlauchfilter einer bestimmten Schlauchfiltereinheit zu reinigen, z.B. sofern bei einem Schlauchfilter ein höchstzulässiger Differenzdruck erreicht ist, kann das Magnetventil derjenigen Reinigungslanze, die der betreffenden Schlauchfiltereinheit zugeordnet ist, für einen definierten Zeitraum geöffnet werden. Die Ansteuerung des Magnetventils erfolgt vorzugsweise mittels der Steuereinheit, insbesondere als Teil des Reinigungsverfahrens und/oder Trocknungsverfahrens. Beispielsweise kann die Steuerung so erfolgen, dass sich der Druck im Tank bei einem Abreinigungsimpuls auf etwa 2 bar reduziert. Allerdings können auch kleinere oder größere Volumina von Reinigungsgas in die Reinigungslanze eingebracht werden.

Das komprimierte Reinigungsgas strömt stoßartig bzw. schlagartig in die Reinigungslanze ein und tritt durch die z.B. 8 Injektionsdüsen aus der Reinigungslanze aus. Vorzugsweise erzeugt das aus einer jeweiligen Injektionsdüse austretende Reinigungsgas jeweils einen Freistrahl, der in Richtung einer zugeordneten Schlauchfilteröffnung gerichtet ist.

Bei einer bevorzugten Ausführungsform kann die Injektionslanze ein Rohr mit einem Innendurchmesser von etwa 48,3 mm sein. Eine jeweilige Injektionsdüse kann eine Durchtrittsbohrung durch die Rohrwand sein, z.B. mit einem Durchmesser von etwa 6 mm bis 8 mm. Die Rohrwand kann z.B. eine Stärke von 2 mm bis 3 mm haben. Ein Abstand zwischen der jeweiligen Injektionsdüse und einer zugeordneten Schlauchfilteröffnung kann bevorzugt etwa 128 mm sein. Das bedeutet, das Reinigungsgas durchströmt nach dem Austritt aus der Reinigungslanze einen freien Bereich von etwa 128 mm, bevor es über eine Schlauchfilteröffnung in einen zugeordneten Schlauchfilter eintritt. Die Schlauchfilteröffnung kann vorzugsweise durch eine Venturi-Düse gebildet sein, wobei ein Durchmesser der Venturi-Düse etwa 81 mm sein kann. Bei dieser Ausführungsform ist der Durchmesser des Freistrahls beim Durchströmen der Schlauchfilteröffnung vorzugsweise kleiner als der Durchmesser der Venturi-Düse. Entsprechend kann das Reinigungsgas erst stromabwärts der eigentlichen Schlauchfilteröffnung auf eine Innenwand der Venturi-Düse treffen. Über ein zuvor beschriebenes Filtersystem bzw. ein daran durchgeführtes Reinigungsverfahren können z.B. Schlauchfilter mit einer Innenlänge von etwa 2000 mm und einem Innendurchmesser von etwa 140 mm effektiv gereinigt werden.

Das Filtersystem weist vorzugsweise eine Steuereinheit zur Steuerung einer Reinigung des Filtersystems in einem automatisierten Prozess auf. Vorzugsweis erfolgt die Reinigung in Abhängigkeit eines bestimmten Differenzdrucks. Bevorzugt ist die Steuereinheit dazu ausgebildet, um das beschriebene Reinigungsverfahren durchzuführen. Das bedeutet, dass die Steuereinheit die einzelnen Verfahrensschritte abarbeiten kann und/oder die entsprechenden Mittel mit Steuersignalen beaufschlagen kann.

Die Steuereinheit kann alternativ oder zusätzlich dazu ausgebildet sein, um eine Trocknung von Trocknungsgut in dem Trockner in einem automatisierten Prozess zu steuern. Bevorzugt kann die Steuereinheit dazu ausgebildet sein, um das beschriebene Trocknungsverfahren durchzuführen. Besonders bevorzugt ist die Steuereinheit dazu ausgebildet, um das Trocknungsverfahren mit einem darin integrierten Reinigungsverfahren durchzuführen. Entsprechend kann die Steuereinheit bevorzugt dazu ausgebildet sein, um sämtliche Komponenten des Trockners und des Filtersystems separat zu steuern.

Unter einem automatisierten Prozess wird verstanden, dass das Reinigungsverfahren bzw. das Trocknungsverfahren ohne direkte manuelle Mitwirkung eines Menschen bestimmungsgemäß durchführbar ist bzw. durchgeführt wird. Die einzelnen Verfahrensschritte, die dem jeweiligen Verfahren zugrunde liegen und/oder die in das Verfahren eingebundenen Mittel, können von der Steuereinheit gesteuert werden, so dass die Reinigung des Filtersystems bzw. die Trocknung von Trocknungsgut vollautomatisch ablaufen kann.

Die Steuereinheit kann vorzugsweise eine Rechnereinheit mit einem oder mehreren zusammenarbeitenden Mikroprozessoren oder dergleichen sowie geeignete Schnittstellen zu Sensoren, Ventilen etc. aufweisen. Bevorzugt kann die Steuereinheit in Form einer geeigneten Software oder in Form von geeigneten Softwareprogrammteilen in der Rechnereinheit realisiert sein. Die Steuereinheit kann vorzugsweise als Teil des Trockners realisiert sein.

Der Trockner kann als erste Baugruppe eine Prozessgasbereitstellungseinheit aufweisen, die zumindest einen steuerbaren Zuluftventilator aufweist. Über den Zuluftventilator kann Umgebungs- bzw. Außenluft angesaugt werden und anschließend durch einen Wärmetauscher geführt und auf eine bestimmte Temperatur erwärmt werden. Der so erhaltene Trocknungsluftstrom (als Prozessgasstrom) kann über eine Luftzuführung in eine Luftkammer des Trocknungsbehälters eingeblasen werden. Vorzugsweise ist der Trockner dazu ausgebildet, um im Betrieb kontinuierlich eine Außentemperatur, d.h. die Temperatur der Umgebungsluft und/oder eine Feuchtigkeit der Umgebungsluft zu bestimmen. Bevorzugt können in Abhängigkeit der Außenlufttemperatur und der Außenluftfeuchtigkeit der Zuluftventilator und der Wärmetauscher so gesteuert werden, dass eine energieoptimierte Trocknung erfolgen kann.

Der Trocknungsbehälter bildet eine zweite Baugruppe des Trockners und kann vorzugsweise in einem Gehäuse, insbesondere in einem Container, angeordnet sein. Die Bauteile des Trocknungsbehälters, die in Kontakt mit dem Trocknungsgut und/oder dem Rohgas kommen, können aus Edelstahl gefertigt sein (sofern ein metallischer Werkstoff zweckmäßig ist). Der Trocknungsbehälter kann in seinem Inneren einen im Querschnitt wannenförmigen Aufnahmebereich für das Trocknungsgut haben, beispielsweise eine Trocknungswanne. Vorzugweise kann diese Trocknungswanne des Trocknungsbehälters auf Wiegestäben stehen bzw. kann davon gehalten werden. Messwerte der Wiegestäbe können der Steuereinheit zugeführt werden.

Innerhalb des Trocknungsbehälters kann das Trocknungsgut zur Trocknung auf einem Siebboden gelagert sein. Der Siebboden kann vorzugsweise die Trocknungswanne nach unten hin, d.h. in Richtung der Luftkammer, begrenzen. Der Siebboden kann mehrere Siebe aufweisen. Zur Reinigung der jeweiligen Siebe kann der Trocknungsbehälter eine steuerbare, vorzugsweise hydraulische, Reinigungsvorrichtung haben. Durch die Reinigungsvorrichtung können die Druckverhältnisse im Trockner möglichst konstant gehalten werden. Beispielsweise kann im Trocknungsverfahren vorgesehen sein, dass eine Reinigung des Siebbodens in Abhängigkeit eines bestimmten Differenzdrucks erfolgt. Vorzugsweise kann eine Reinigung, z.B. mittels der Steuereinheit initiiert werden, sobald ein Differenzdruck zwischen dem Druck der Trocknungsluft in der Luftkammer und dem Druck des Rohgases in der Trocknungswanne einen bestimmten Wert erreicht und/oder überschreitet. Entsprechend können auch die Luftkammer und die Trocknungswanne Drucksensoren haben.

Der Trocknungsbehälter kann ein steuerbares Rührwerk bzw. einen Mischer zur Auflockerung und Homogenisierung des Trocknungsguts haben. Der Mischer kann vorzugsweise in der Trocknungswanne angeordnet sein. Bevorzugt kann der Mischer ein gegenläufiges Doppelrührwerk sein. Durch den Mischer kann das Trocknungsgut zur Trocknung kontinuierlich in Bewegung gehalten werden. Dadurch kann eine möglichst gleichmäßige Durchströmung des Trocknungsguts erreicht werden. Der Trocknungsbehälter kann weiterhin einen oder mehrere Feuchtigkeitssensoren haben, um eine Feuchtigkeit des Trocknungsguts zu bestimmen. Messwerte des Feuchtigkeitssensors können der Steuereinheit zugeführt werden.

Die Luftkammer im Trocknungsbehälter ist vorzugsweise unterhalb des Siebbodens angeordnet, d.h. zwischen dem Siebboden und einem Boden des Trocknungsbehälters. Vorzugsweise kann der Trocknungsluftstrom nach oben aus der Luftkammer austreten und durch den Siebboden hindurchtreten, wobei das Trocknungsgut durchströmt und dadurch getrocknet wird.

Nach dem Durchströmen des Trocknungsguts kann das partikelbeladene Rohgas aus dem Trocknungsbehälter vorzugsweise nach oben austreten, d.h. im Wesentlichen entgegen der Lotrichtung, und kann in das Filtersystem eintreten. Das Filtersystem kann als Gehäuse einen (nach außen) im Wesentlichen luftdicht verschlossenen Container haben. Vorzugsweise kann der Container schallisoliert sein. Die Bauteile des Filtersystems, die in Kontakt mit dem Rohgas und/oder dem Reingas kommen, können aus Edelstahl gefertigt sein (sofern ein metallischer Werkstoff zweckmäßig ist).

Innerhalb des Filtersystemgehäuses sind die Schlauchfilter vorzugsweise hängend angeordnet, insbesondere annähernd parallel zur Lotrichtung. Vorzugsweise können die Schlauchfilter in Reihen in ein Halteblech eingehängt sein. Beispielsweise kann das Filtergewebe am reingasseitigen Ende wenigstens einen flexiblen Haltering bzw. Fixierring haben, über den der Schlauchfilter in einer Aussparung im Halteblech montiert werden kann, insbesondere durch Einklemmen. Die Schlauchfilter können einzeln oder in Gruppen (als Schlauchfiltereinheit) aus dem Gehäuse demontiert werden. Beispielsweise können die Schlauchfilter entgegen der Lotrichtung aus dem Halteblech nach oben herausgezogen werden.

Zur Reinigung von Rohgas können die Schlauchfilter radial von außen nach innen durchströmt werden. Das Reingas kann über die Schlauchfilteröffnung aus dem Innenraum des jeweiligen Schlauchfilters austreten. Die Schlauchfilteröffnung kann demnach - je nach Betriebszustand - als Auslass für gereinigtes Reingas oder als Einlass für Reinigungsgas und Sekundärluft dienen. Nach dem Austritt aus den jeweiligen Schlauchfiltern kann das Reingas über einen zentralen Gasauslass aus dem Filtersystem austreten.

Bei einer bevorzugten Ausführungsform können zumindest das Filtersystem und der Trocknungsbehälter, ggf. auch die Prozessgasbereitstellungseinheit, modular aufgebaut sein. Vorzugsweise können die einzelnen Baugruppen zumindest teilweise in einem ISO-Container angeordnet sein, z.B. in einem 40-Fuß-Container. Je nach Baugruppe können äußere Anbauten vorgesehen sein, insbesondere das Tanksystem des Filtersystems. Vorteilhafterweise kann der Trockner durch die Modularität besonders flexibel eingesetzt werden.

Der Trocknungsbehälter kann weitere Komponenten aufweisen, wie z.B. eine Befüllvorrichtung. In Abhängigkeit des Trocknungsguts kann die Befüllung des Trocknungsbehälters, insbesondere der Trocknungswanne, mittels Förderschnecken, Förderbändern und/oder Pumpen erfolgen. Der Austrag von Trocknungsgut kann z.B. mittels einer Förderschnecke erfolgen, die an einer Stirnseite des Trocknungsbehälters angeordnet sein kann.

In dem Trocknungsverfahren kann vorgesehen sein, dass ein Eintrag und/oder ein Austrag von Trocknungsgut in Abhängigkeit eines Trocknungsgrads des Trocknungsguts im Trocknungsbehälter gesteuert wird. Beispielsweise kann bei Erreichen eines bestimmten Trockengrads mittels einer Förderschnecke das Trocknungsgut ausgetragen werden. Der Materialaustrag kann so lange fortgesetzt werden, bis ein bestimmter Mindestfüllstand des Trocknungsbehälters erreicht ist und/oder eine bestimmte Maximalfeuchtigkeit im Trocknungsgut erreicht wird.

Entsprechend kann die Befüllung des Trocknungsbehälters gestartet werden, sobald ein definierter Trockengrad im Trocknungsgut erreicht ist und/oder sobald bestimmter Füllstand im Trocknungsbehälter erreicht ist.

Vorteilhafterweise kann in dem Trocknungsverfahren, vor allem auf Grund der ständigen Überwachung des Feuchtigkeitsgehalts des Trocknungsguts, eine schnelle Trocknung in Kombination mit einem vergleichsweise geringen elektrischen und thermischen Energiebedarf erreicht werden.

Das Filtersystem kann unterschiedliche Arten von Schlauchfiltern aufweisen, beispielsweise Schlauchfilter unterschiedlicher Größe oder mit unterschiedlichen Filtermaterialien. Entsprechend ist das Filtersystem nicht auf eine bestimmte Art von Schlauchfilter beschränkt. Vorzugsweise kann der Schlauchfilter ein Filtergewebe aus Polyester haben. Beispielsweise kann ein Schlauchfilter vom Typ 5-500-1.3.10.41 verwendet werden (Hersteller: WOKU-Filtermedien, Beckum-Neubeckum, Deutschland).

Das schlauchartige Filtergewebe kann auf einen Stützkorb aus Edelstahl aufgezogen sein. Beispielsweise kann der Stützkorb aus einem Stahl vom Typ 1.4301 gefertigt sein. Der Stützkorb ist vorzugsweise dazu ausgebildet, um im Filterbetrieb einen Innenraum des Schlauchfilters auszubilden bzw. aufrechtzuerhalten. Insbesondere kann der Stützkorb einen (Halte-)Stutzen aufweisen, der im montierten Zustand einem Halteblech oben aufliegt. Der Stutzen kann z.B. einstückig mit einer Venturi-Düse ausgebildet sein. Der Stutzen und/oder die Venturi-Düse können fest mit den übrigen Teilen des Stützkorbs verbunden sein.

Die Erfindung wird im Folgenden unter Hinweis auf die beigefügten Figuren anhand von Ausführungsbeispielen noch einmal näher erläutert. Dabei sind in den verschiedenen Figuren gleiche Komponenten mit identischen Bezugsziffern versehen. Die Figuren sind in der Regel nicht maßstäblich. Es zeigen:
Figur 1 eine perspektivische Darstellung eines Trockners gemäß der Erfindung,
Figur 2 eine Schnittansicht des Trockners aus Figur 1,
Figur 3 eine perspektivische Schnittansicht von Teilen des Trockners aus Figur 1,
Figuren 4 und 5 perspektivische Ansichten von Teilen eines Filtersystems gemäß der Erfindung,
Figur 6 eine Schnittansicht von Teilen eines Filtersystems gemäß der Erfindung,
Figur 7 eine schematische Darstellung eines Schlauchfilters in einem Reinigungsverfahren gemäß der Erfindung,
Figur 8 ein Flussdiagramm eines Ausführungsbeispiels eines Verfahrens zur Trocknung von Trocknungsgut gemäß der Erfindung.

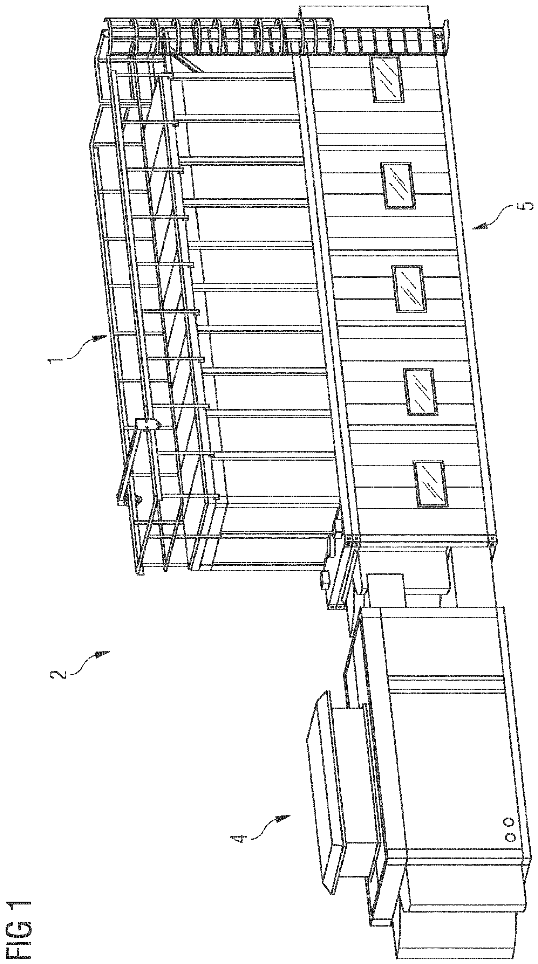

In Figur 1 ist schematisch ein Trockner 2 gemäß der Erfindung gezeigt. Der Trockner 2 umfasst als Baugruppen eine Prozessgasbereitstellungseinheit 4, einen sich daran anschließenden Trocknungsbehälter 5, sowie ein sich an den Trocknungsbehälter 5 anschließendes Filtersystem 1.

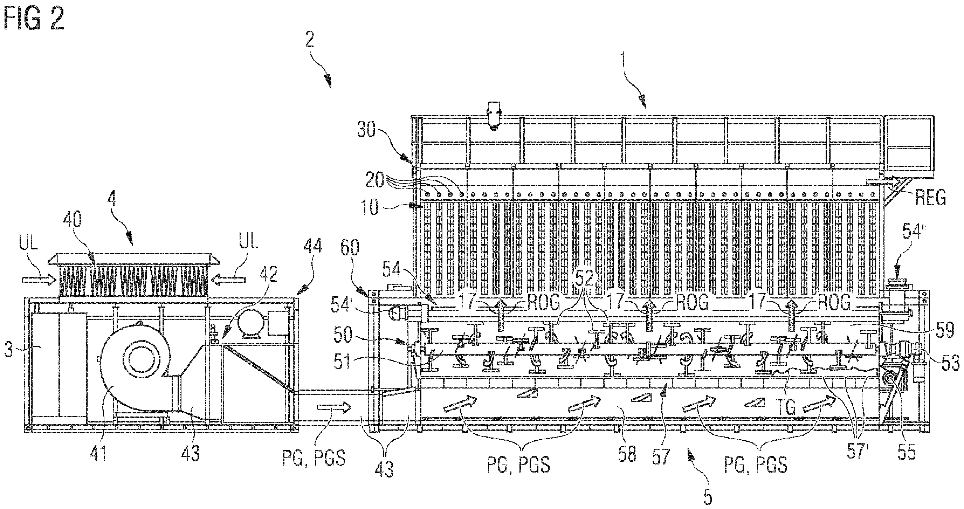

In Figur 2 ist der Trockner 2 aus Figur 1 schematisch und im Schnitt gezeigt. Im bestimmungsgemäßen Trocknungsbetrieb, z.B. bei der Durchführung des beschriebenen Trocknungsverfahrens, wird Umgebungsluft UL über einen Zuluftfilter 40 durch einen Zuluftventilator 41 der Prozessgasbereitstellungseinheit 4 angesaugt. Die angesaugte Umgebungsluft UL wird nach Durchströmen des Zuluftventilators 41 über eine Luftzuführung 43 durch einen Wärmetauscher 42 geleitet. Durch die Filterung und Erwärmung der Umgebungsluft UL wird in der Prozessgasbereitstellungseinheit 4 ein Prozessgas PG in Form eines Prozessgasstroms PGS bereitgestellt. Das Prozessgas PG ist hier gefilterte Umgebungsluft, die auf eine bestimmte Solltemperatur erwärmt wurde.

Die Prozessgasbereitstellungseinheit 4 umfasst weiterhin eine schematisch gezeigte Steuereinheit 3. Die Steuereinheit 3 ist dazu ausgebildet, um die Komponenten des Trockners 2 zu steuern, insbesondere, um in dem Trockner 2 das beschriebene Trocknungsverfahren auszuführen. Die Steuereinheit 3 und die übrigen Bauelemente der Prozessgasbereitstellungseinheit 4 sind in einem Gehäuse 44, z.B. einem begehbaren Container 44 angeordnet (abgesehen vom Zuluftfilter 40).

Der Prozessgasstrom PGS wird durch eine Luftzuführung 43 in eine Luftkammer 58 des Trocknungsbehälters 5 eingeblasen. Die Luftkammer 58 ist im bestimmungsgemäßen Betrieb des Trockners 2 unterhalb eines Siebbodens 57 mit mehreren Sieben 57` angeordnet bzw. wird nach hier oben durch den Siebboden 57 und nach hier unten durch einen Boden des Trocknungsbehälters 5 begrenzt. Die Luftkammer 58 ist so ausgestaltet, dass der Prozessgasstrom PGS gleichmäßig über eine Längserstreckung der Luftkammer 58 verteilt nach hier oben in Richtung des Siebbodens 57 gelenkt wird. Das Prozessgas PG des Prozessgasstroms PGS durchströmt ein Trocknungsgut TG, das auf den Sieben 57` angeordnet ist, wobei ein mit Partikeln 17 beladenes Rohgas ROG erhalten wird.

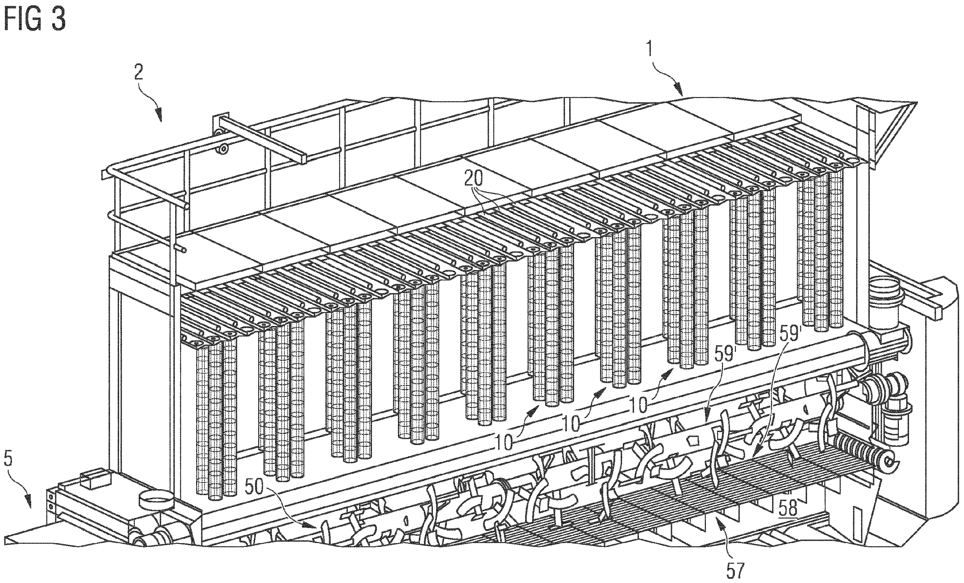

Das Trocknungsgut TG ist hier rein schematisch gezeigt, wobei im Normalfall ein größeres Volumen Trocknungsgut TG auf dem Siebboden 57 angeordnet sein kann. Das Trocknungsgut TG ist in einem im Querschnitt wannenförmigen Aufnahmebereich angeordnet, hier in einer Trocknungswanne 59. Die Trocknungswanne 59 wird hier durch den Siebboden 57 und seitlich daran anschließende wannenförmige Wände 59' gebildet. Der Aufbau der Trocknungswanne 59 und die Wände 59' sind in Figur 3 gezeigt.

Das Trocknungsgut TG kann über eine Förderschnecke 55 aus der Trocknungswanne 59 bzw. aus dem Trocknungsbehälter 5 ausgetragen werden. Die Förderschnecke 55 ist stirnseitig im Trocknungsbehälter 5 angeordnet und kann von der Steuereinheit 3 angesteuert werden.

Das Trocknungsgut TG wird zur Trocknung von hier unten vom Prozessgas PG gleichmäßig durchströmt und gleichzeitig von einem Mischer, hier ein Rührwerk 50, z.B. kontinuierlich in Bewegung gehalten. Das Rührwerk 50 ist hier ein gegenläufiges Doppelrührwerk 50, wobei jeder der beiden Rührwerkteile eine Rührwerkwelle 51 mit einer Vielzahl von (Rühr-)Paddeln 52 aufweist. Jede Rührwerkwelle 51 wird von einem Getriebemotor 53 angetrieben, der von der Steuereinheit 3 ansteuerbar ist. In Figur 2 ist nur eine Rührwerkwelle 51 gezeigt.

Die Befüllung der Trocknungswanne 59 mit Trocknungsgut TG erfolgt mittels einer Förderschnecke 54, die in Richtung des Siebbodens 57 weisende Austrittsöffnungen hat (nicht gezeigt). Der Antrieb der Förderschnecke 54 erfolgt mittels eines steuerbaren Getriebemotors 54'. Über eine Trocknungsgutzufuhr 54" kann der Förderschnecke 54 Trocknungsgut TG zugeführt werden.

Der Trocknungsbehälter 5 hat ein Gehäuse 60, hier ein Container 60, in dem die zuvor beschriebenen Bauteile sowie weitere Komponenten angeordnet sind. Der Container 60 ist Teil des Trocknungsbehälters 5 und bildet den Trocknungsbehälter 5 mit aus. Der Container 60 weist an seiner Oberseite eine Öffnung auf, über die das Rohgas ROG aus dem Trocknungsbehälter 5 austreten und in das Filtersystem 1 eintreten kann.

Das Filtersystem 1 weist ein Gehäuse 30 auf, hier einen Container 30. Der Container 30 hat an seiner dem Trocknungsbehälter 5 zugewandten Unterseite eine Öffnung, die im Wesentlichen die gleichen Abmessungen hat wie die Öffnung in der Oberseite des Trocknungsbehälters 5. Beispielsweise könnte der Container 30 anstelle eines Containerbodens eine Öffnung zum Durchtritt von Rohgas ROG haben. Alternativ könnte auch ein Boden mit einer möglichst großen Öffnung vorgesehen sein. Die Öffnung im Container 30 und die Öffnung im Container 60 sind so dimensioniert und/oder so zueinander positioniert, dass das Filtersystem 1 möglichst gleichmäßig von Rohgas ROG durchströmt wird.

Das Filtersystem 1 hat eine Vielzahl von Schlauchfiltern 10, die hier hängend bzw. in Lotrichtung angeordnet sind. In Strömungsrichtung oberhalb der Schlauchfilter 10 sind Injektionsrohre 20 zur Reinigung der Schlauchfilter 10 angeordnet. Im Filterbetrieb können die Schlauchfilter 10 von außen nach innen radial von Rohgas ROG durchströmt werden, wobei ein gefiltertes Reingas REG erhalten wird. Das Reingas REG kann über einen hier nicht gezeigten zentralen Gasauslass aus dem Filtersystem 1 und damit aus dem Trockner 2 abgeführt werden.

In Figur 3 sind Teile des Trockners 2 aus den Figuren 1 und 2 schematisch und im Schnitt gezeigt. Es ist erkennbar, dass das Filtersystem 1 eine Vielzahl von Schlauchfiltern 10 aufweist, die hier in Reihen gruppiert sind, wobei jede Reihe mehrere Schlauchfilter 10 hat. Eine solche Gruppe bzw. Reihe mit mehreren Schlauchfiltern 10 wird als Schlauchfiltereinheit bezeichnet. Die Schlauchfiltereinheiten sind im Wesentlichen parallel zueinander angeordnet.

In Strömungsrichtung oberhalb der Schlauchfilter 10 sind Injektionsrohre 20 parallel zueinander angeordnet. Die Injektionsrohre 20 sind so positioniert, dass jeweils ein Injektionsrohr 20 einer bestimmten Schlauchfiltereinheit zugeordnet ist, um ein Reinigungsgas in die Schlauchfilter 10 der betreffenden Schlauchfiltereinheit einzubringen.

Es wird darauf hingewiesen, dass der besseren Übersichtlichkeit wegen in den Figuren 3 bis 5 die jeweiligen Reihen bzw. Schlauchfiltereinheiten nur teilweise gezeigt sind, wobei einzelne Positionen der jeweiligen Reihe unbesetzt sind, d.h. keinen Schlauchfilter 10 haben. Weiterhin sind die jeweiligen Schlauchfilter in den Figuren 2 bis 5 nur teilweise gezeigt. Das bedeutet, dass nur ein jeweiliger Stützkorb gezeigt ist (ohne Filtermaterial), wobei die Stützkörbe selbst teilweise vereinfacht und rein schematisch sowie in einigen Figuren nur abschnittsweise gezeigt sind.

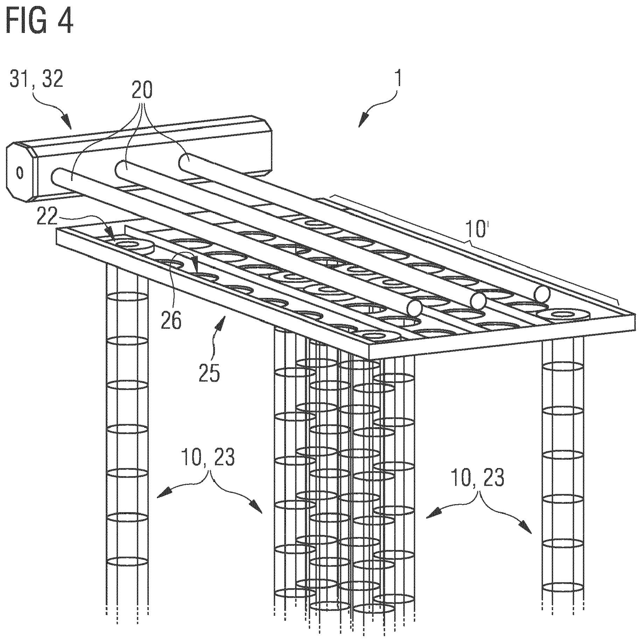

In Figur 4 sind schematisch Teile eines Filtersystems gemäß der Erfindung in perspektivischer Weise gezeigt, z.B. Teile des Filtersystems 1 des Trockners 2 aus Figur 1. Das Filtersystem 1 hat mehrere Schlauchfilter 10, wobei hier von jedem Schlauchfilter 10 nur ein Stützkorb 23 teilweise gezeigt ist. Im Normalfall können die Stützkörbe 23 von einem schlauchartigen Filtergewebe umhüllt bzw. bedeckt sein, das den Stützkörben 23 jeweils außen aufliegt.

Die Schlauchfilter 10 werden durch ein Halteblech 25 bestimmungsgemäß im Filtersystem 1 gehalten, wobei das Halteblech 25 wiederum am Gehäuse 30 des Filtersystems 1 angeordnet sein kann. Das Halteblech 25 weist eine Anzahl von Öffnungen 26 auf, wobei hier jeweils 8 Öffnungen 26 in einer Reihe angeordnet sind. Die Öffnungen 26 sind so ausgestaltet, dass in eine jeweilige Öffnung 26 ein Schlauchfilter 10 eingesteckt oder eingehängt werden kann. Zur Montag bzw. Demontage können die Schlauchfilter 10 (nach Entfernung der Injektionsrohre 20) von hier oben in die Öffnungen 26 gesteckt werden bzw. daraus herausgezogen werden. Zur Halterung weisen die Schlauchfilter 10 jeweils im Bereich der Schlauchfilteröffnung einen flexiblen Haltering bzw. Fixierring (nicht sichtbar) auf, der z.B. in das Filtermaterial integriert sein kann. Im montierten Zustand kann der Haltering das Filtermaterial nach außen gegen das Halteblech 25 drücken, um das Filtermaterial in der Öffnung 26 zu halten. Der Schlauchfilter 10 weist weiterhin einen (Halte-)Stutzen 22 auf, der z.B. fester Teil des Stützkorbs 23 sein kann oder der Stutzen 22 kann lösbar mit dem übrigen Stützkorb 23 verbunden sein. Über den Stutzen 22 kann der Stützkorb 23 in eine Öffnung 26 des Halteblechs 25 eingehängt werden, wobei der Stutzen 22 dem Halteblech 25 dann oben aufliegt.

In Figur 4 sind einige der Öffnungen 26 frei und weisen keinen Schlauchfilter 10 auf. Im Normalfall kann in jeder Öffnung 26 ein Schlauchfilter 10 angeordnet sein und darin, z.B. mittels Schwerkraft, gehalten werden. Die Öffnungen 26 sind in parallelen Reihen angeordnet, wobei hier beispielhaft vier Reihen mit jeweils acht Öffnungen 26 gezeigt sind. Die Schlauchfilter 10, die in einer jeweiligen Reihe von Öffnungen 26 angeordnet sind, bilden eine Schlauchfiltereinheit 10'. Bei dem Beispiel in Figur 4 würden also jeweils 8 Schlauchfilter 10, die in einer Reihe angeordnet sind, eine Schlauchfiltereinheit 10' bilden.

Vorzugsweise können vier dieser Schlauchfiltereinheiten 10' eine Sektion des Filtersystems 1 ausbilden. Die Schlauchfilter 10 einer Sektion können zur Reinigung durch einen gemeinsamen Tank 32 des Tanksystems 31 mit Reinigungsgas versorgt werden. Der in Figur 4 gezeigte Tank 32 steht in Verbindung mit Injektionsrohren 20, die hier oberhalb der Schlauchfilter 10 angeordnet sind. Jeweils ein Injektionsrohr 20 ist einer bestimmten Schlauchfiltereinheit 10' bzw. einer Reihe zugeordnet, wobei hier der besseren Übersichtlichkeit wegen nur drei von vier Injektionsrohren 20 gezeigt sind. Die Injektionsrohre 20 können separat mit einem komprimierten Reinigungsgas, das im Tank 32 vorgehalten wird, geflutet werden, z.B. durch eine entsprechende Ansteuerung durch die Steuereinheit. Das Tanksystem 31 kann weitere Komponenten umfassen, insbesondere eine Kompressoreinheit (nicht gezeigt).

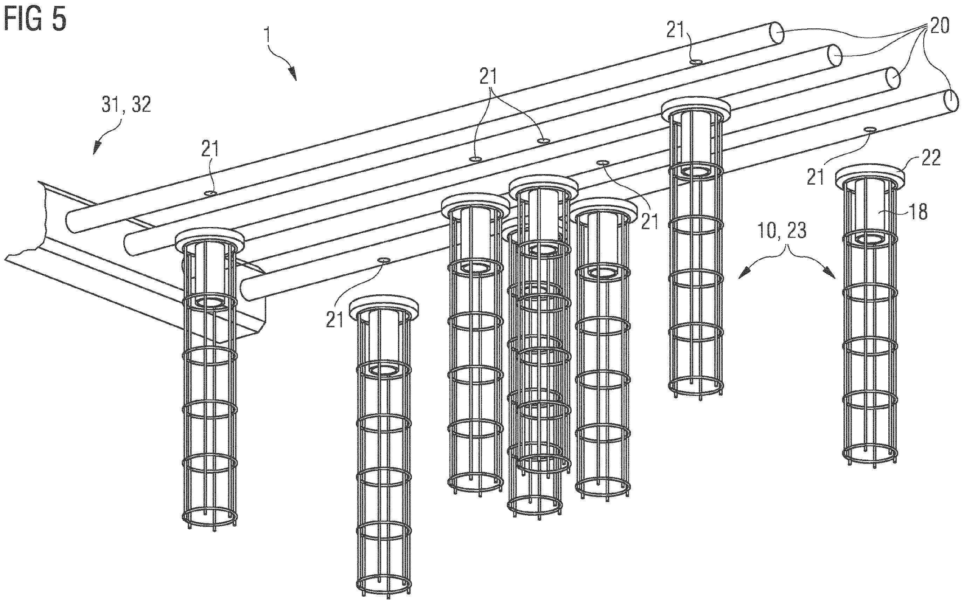

In Figur 5 ist der Teil des Filtersystems 1 aus Figur 4 in einer anderen Perspektive schematisch gezeigt. Allerdings ist im Gegensatz zu Figur 4 hier das Halteblech nicht gezeigt. In Figur 5 ist erkennbar, dass jedes Injektionsrohr 20 an seiner Unterseite, d.h. in Richtung der Schlauchfilter 10 weisend, eine Anzahl von Injektionsdüsen 21 aufweist. Über diese Injektionsdüsen 21 kann das in das jeweilige Injektionsrohr 20 eingeführte komprimierte Reinigungsgas aus dem Injektionsrohr 20 austreten und in einen zugeordneten Schlauchfilter 10 eintreten. Die Injektionsdüse 21 und der jeweils zugeordneten Schlauchfilter 10 können im Wesentlichen konzentrisch zueinander im Filtersystem 1 angeordnet sein.

Wie schon beschrieben wurde, können vorzugsweise mehrere Schlauchfilter 10 zu einer Schlauchfiltereinheit 10' zusammengefasst sein, die zur Reinigung über ein gemeinsames Injektionsrohr 20 versorgt werden. Entsprechend kann die Unterseite, anders als in Figur 5 rein schematisch gezeigt, eine entsprechend größere Anzahl von Injektionsdüsen 21 aufweisen, z.B. 8 Düsen, die gleichmäßig verteilt entlang des Injektionsrohrs 20 angeordnet sind. Das bedeutet, dass vorzugsweise jedem Schlauchfilter 10 eine eigene Injektionsdüse 21 zugeordnet ist.

Die Schlauchfilter 10 haben hier jeweils eine optionale Venturi-Düse 18, die sich hier an den Stutzen 22 anschließt und in einen Innenraum des Schlauchfilters 10 bzw. des Stützkorbs 23 hineinragt. Die Venturi-Düse 18 kann z.B. mit dem Stutzen 22 verschweißt sein. Die Venturi-Düse 18 kann auch einteilig mit dem Stutzen 22 ausgebildet sein.

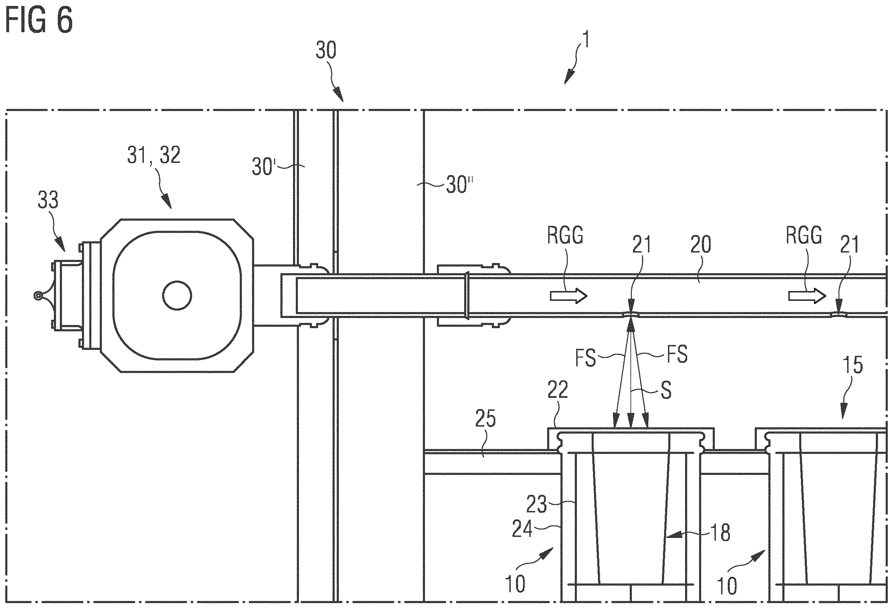

In Figur 6 ist eine schematische Schnittansicht von Teilen eines Filtersystems gemäß der Erfindung gezeigt, z.B. Teile des Filtersystems 1 des Trockners 2 aus Figur 1. Es wird erkennbar, dass das Tanksystem 31 mit dem Tank 32 außerhalb des Gehäuses 30 angeordnet ist, wobei der Tank 32 über Rohrleitungen, die im Wesentlichen luftdicht durch eine Gehäusewand 30' und eine Isolierung 30" geführt sind, mit dem im Gehäuse 30 angeordneten Injektionsrohr 20 verbunden ist. Das Tanksystem 31 umfasst Ventile 33, wobei jedem Düsenstock 20 ein separat steuerbares Ventil 33 zugeordnet ist, um den jeweiligen Düsenstock 20 mit komprimierten Reinigungsgas RGG zu beaufschlagen (hier nur ein Ventil 33 gezeigt).

Die Schlauchfilter 10 haben jeweils einen Stützkorb 23 mit einem außen aufliegenden Filtergewebe 24. Das Filtergewebe 24 bildet eine Filterwand des Schlauchfilters 10. Der jeweilige Stützkorb 23 ist in nicht näher gezeigter Weise mit einem Stutzen 22 verbunden, wobei der Stutzen 22 dem Halteblech 25 oben aufliegt. Der jeweilige Stutzen 22 ist mit einer Venturi-Düse 18 verbunden, die hier eine Schlauchfilteröffnung 15 bildet und auch in den Schlauchfilter 10 hineinragt.

Das Injektionsrohr 20 hat einen im Wesentlichen runden Querschnitt und hat hier beispielhaft einen Innendurchmesser von etwa 48,3 mm und ist aus Edelstahl gefertigt. Das Injektionsrohr 20 hat hier zwei rein schematisch gezeigte Injektionsdüsen 21, wobei jede Injektionsdüse 21 einem bestimmen Schlauchfilter 10 zugeordnet ist. Die Injektionsdüsen 21 sind hier oberhalb der Schlauchfilter 10 angeordnet und sind der Schlauchfilteröffnung 15 des zugeordneten Schlauchfilters 10 zugewandt. Die Schlauchfilteröffnung 15 ist der Bereich, in dem das Reinigungsgas in den Schlauchfilter 10 eintritt. Die Schlauchfilteröffnung 15 ist vorzugsweise der Bereich des Schlauchfilters 10 bzw. der Venturi-Düse 18, der den geringsten Abstand zur Injektionsdüse 21 hat.

Es wird erkennbar, dass die Injektionsdüsen 21 von der zugeordneten Schlauchfilteröffnung 15 beabstandet sind. Ein Abstand zwischen den Injektionsdüsen 21 und den Schlauchfilteröffnungen 15 beträgt hier etwa 128 mm. Zur Reinigung kann das Injektionsrohr 20 stoßartig mit einem bestimmten Volumen komprimierten Reinigungsgases RGG geflutet werden. Das Reinigungsgas RGG kann über die jeweiligen Injektionsdüsen 21 aus dem Injektionsrohr 20 austreten, wobei jeweils ein Freistrahl FS gebildet wird (hier nur für die linke Injektionsdüse 21 schematisch gezeigt). Der Freistrahl FS durchläuft außerhalb des Schlauchfilters eine definierte Strecke s, bevor der Freistrahl FS in den Schlauchfilter 10 eintritt. Die definierte Strecke s entspricht dem (kürzesten) Abstand zwischen der Injektionsdüse 21 und der Schlauchfilteröffnung 15. Folglich beträgt die Strecke s, die der Freistrahl außerhalb des Schlauchfilters 10 durchströmt, hier ebenfalls etwa 128 mm. Dessen ungeachtet ist es möglich, dass Teile des Freistrahls außerhalb des Schlauchfilters 10 einen weiteren Weg zurücklegen, als die definierte Strecke s, z.B. die Randregionen des Freistrahls.

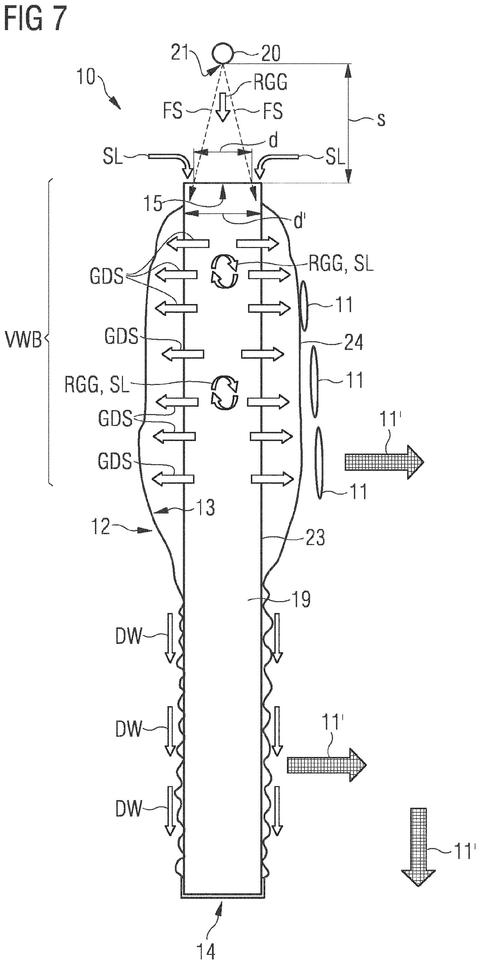

In Figur 7 ist rein schematisch ein Schlauchfilter gezeigt, an dem ein Reinigungsverfahren gemäß der Erfindung durchgeführt wird.

In dem Reinigungsverfahren wird dem Injektionsrohr 20 stoßartig ein bestimmtes Volumen Reinigungsgas RGG zugeführt, wobei das Reinigungsgas RGG über eine Injektionsdüse 21 aus dem Injektionsrohr 20 in Form eines Freistrahls FS austritt. Der stoßartig gebildete Freistrahl FS durchläuft ausgehend von der Injektionsdüse 21 eine definierte Strecke s außerhalb des Schlauchfilters 10, bevor der Freistrahl FS über die Schlauchfilteröffnung 15 in den Schlauchfilter 10 eintritt. Die Strecke s bezieht sich auf die Komponente des Freistrahls FS, die im Wesentlichen parallel zur Längserstreckung des Schlauchfilters 10 strömt (hier in Pfeilrichtung).

Es ist erkennbar, dass ein Durchmesser d des Freistrahls FS im Zeitpunkt des Durchströmens der Schlauchfilteröffnung 15 kleiner ist als ein Durchmesser d' der Schlauchfilteröffnung 15 selbst. Entsprechend schlägt der Freistrahl FS erst stromabwärts der Schlauchfilteröffnung 15 auf das Filtermaterial 24 des Schlauchfilters 10 auf. Es ist erkennbar, dass zusätzlich zum Reinigungsgas RGG (in Form des Freistrahls FS) auch Sekundärluft SL in den Schlauchfilter 10 eingeführt wird. Die Sekundärluft SL wird durch den Freistrahl FS von außerhalb des Schlauchfilters 10 mitgerissen.

Die Sekundärluft SL wird durch die stoßartige Strömungsbewegung des Reinigungsgases RGG in einen Innenraum 19 des Schlauchfilters 10 mitgerissen und dort mit dem Reinigungsgas RGG verwirbelt bzw. durchmischt. In Figur 7 ist schematisch ein möglicher Verwirbelungsbereich VWB gezeigt, der sich ausgehend von der Schlauchfilteröffnung 15 über etwas mehr als ein Drittel der Länge des Schlauchfilters 10 erstreckt. Das bedeutet, dass Sekundärluft SL etwas tiefer als das obere Drittel in den Schlauchfilter 10 eindringen kann.

Durch das stoßartig eingebrachte Reinigungsgas RGG und das zusätzliche Volumen an mitgerissener Sekundärluft SL bildet sich vor allem im Verwirbelungsbereich VWB ein kurzzeitiger, kräftiger Gasdruckstoß GDS, der auf eine Reingasseite 13 des Schlauchfilters 10 bzw. des Filtermaterials 24 wirkt. Durch den Impuls des Gasdruckstoßes GDS, der auf Grund der Sekundärluft SL besonders ausgeprägt ist, insbesondere im Verwirbelungsbereich VWB, wird das Filtermaterial 24 schlagartig nach außen vom Stützkorb 23 wegbewegt und ggf. auch gedehnt.

Im Filterbetrieb ist es üblicherweise so, dass das zumindest geringfügig flexible Filtermaterial 24 gegen den Stützkorb 23 bzw. in Richtung des Innenraums 19 gesaugt wird. In Folge einer abrupten Auslenkung und/oder einer teilweisen Expansion des Filtermaterials 24 durch den Gasdruckstoß GDS in eine entgegengesetzte Richtung können Filtrationspartikel 11, die an einer Rohgasseite 12 des Schlauchfilters 10 anhaften, abgelöst bzw. abgesprengt werden. Die abgelösten Partikel 11', z.B. ein Filterkuchen, können durch die Schwerkraft nach unten in das Trocknungsgut fallen und mit diesem aus dem Trockner entfernt werden. Es wird darauf hingewiesen, dass die Auslenkung bzw. die Dehnung des Filtermaterials 24 hier rein schematisch gezeigt ist, wobei im Normalfall das Filtermaterial 24 weniger weit vom Stützkorb 23 weggestoßen wird. Weiterhin könnte auch der Verwirbelungsbereich VWB anders sein, z.B. weniger tief in den Schlauchfilter 10 hineinreichen.

In Figur 7 ist weiter erkennbar, dass sich durch den Impuls des Gasdruckstoßes GDS, der auf die Reingasseite 13 einwirkt, eine Druckwelle DW im Filtermaterial 24 bzw. in der Filterwand ausbildet, die sich in Richtung eines Schlauchfilterbodens 14 ausbreitet. Die Druckwelle DW kann durch den Gasdruckstoß GDS erzeugt werden und könnte, anders als hier gezeigt, grundsätzlich auch im Bereich des Filtermaterials 24 auftreten, das den Verwirbelungsbereich VWB umgibt. Die Druckwelle DW kann sich im Filtermaterial 24 entlang der Längserstreckung des Schlauchfilters 10 ausbreiten und sich z.B. bis zum Schlauchfilterboden 14 fortpflanzen. Durch die Druckwelle DW können vorzugsweise Schwingungen im Filtermaterial 24 erzeugt werden, so dass anhaftende Filtrationspartikel 11 von der Rohgasseite 12 abgelöst werden. Dadurch kann auch der hier untere, dem Schlauchfilterboden 14 zugewandte Teil des Schlauchfilters 10, effektiv gereinigt werden. Anders als hier rein schematisch gezeigt, könnte auch ein fließender Übergang zwischen dem Reinigungseffekt durch den Gasdruckstoß GDS und dem Reinigungseffekt durch die Druckwelle DW vorhanden sein.

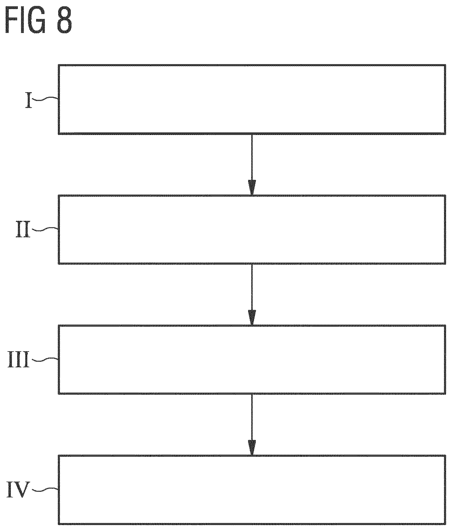

Figur 8 zeigt ein stark vereinfachtes Ablaufdiagramm eines Verfahren zur Trocknung von Trocknungsgut gemäß der Erfindung. Das Verfahren kann vorzugsweise in einem zuvor beschriebenen Trockner mit einem Filtersystem durchgeführt werden. In einem ersten Schritt I wird ein, vorzugsweise erwärmtes, Prozessgases in Form eines Prozessgasstroms bereitgestellt. In einem zweiten Schritt II wird der Prozessgasstrom durch ein zu trocknendes Trocknungsgut hindurchgeführt. In Folge des Hindurchführens durch das Trocknungsgut wird ein mit Partikeln angereichertes Rohgas erhalten. In einem dritten Schritt III wird das Rohgases in ein Filtersystem eines Trockners eingebracht, vorzugsweise durch Einströmen, wobei der Trockner zumindest einen Schlauchfilter hat. Das Rohgas wird so in das Filtersystem eingebracht, dass eine Rohgasseite des Schlauchfilters mit dem Rohgas beaufschlagt wird, wobei das Rohgas zur Filterung eine relative Feuchtigkeit von wenigstens 80 % hat. In einem vierten Schritt IV erfolgt ein intermittierendes Ablösen von an der Rohgasseite anhaftenden Filtrationspartikeln durch Beaufschlagen einer Reingasseite des Schlauchfilters mit einem Gasdruckstoß in Abhängigkeit einer definierten Bedingung. Vorzugsweise kann Schritt IV ein Reinigungsverfahren gemäß der Erfindung beinhalten.

Es wird abschließend noch einmal darauf hingewiesen, dass es sich bei den vorhergehend detailliert beschriebenen Verfahren bzw. Trocknern und Filtersystemen lediglich um Ausführungsbeispiele handelt, welche vom Fachmann in verschiedenster Weise modifiziert werden können, ohne den Bereich der Erfindung zu verlassen. So kann beispielsweise die Anzahl der Schlauchfilter in einem Filtersystem und/oder die Ausrichtung der Schlauchfilter in dem Filtersystem anders sein. Weiterhin könnte der Abstand zwischen einer Injektionsdüse und einer Schlauchfilteröffnung auch zwischen den zuvor beschrieben Werten liegen. Es ist auch möglich, dass die Schlauchfilter im Wesentlichen orthogonal zur Lotrichtung oder um einen bestimmten Winkel gegenüber der Lotrichtung verkippt im Filtersystem angeordnet sind. Weiterhin schließt die Verwendung der unbestimmten Artikel "ein" bzw. "eine" nicht aus, dass die betreffenden Merkmale auch mehrfach vorhanden sein können.

### Bezugszeichenliste

1 Filtersystem
2 Trockner
3 Steuereinheit
4 Prozessgasbereitstellungseinheit
5 Trocknungsbehälter
10 Schlauchfilter
10' Schlauchfiltereinheit
11, 11' Filtrationspartikel
12 Rohgasseite
13 Reingasseite
14 Schlauchfilterboden
15 Schlauchfilteröffnung
17 Partikel
18 Venturi-Düse
19 Innenraum
20 Injektionsrohr / Düsenstock
21 Injektionsdüse
22 Stutzen
23 Stützkorb
24 Filtergewebe / Filtermaterial
25 Halteblech
26 Öffnung
30 Gehäuse / Container
30' Gehäusewand
30" Isolierung
31 Tanksystem
32 Tank
33 Ventil
40 Zuluftfilter
41 Ventilator/ Gebläse
42 Wärmetauscher
43 Luftzuführung
44 Gehäuse / Container
50 Rührwerk
51 Rührwerkwellen
52 Paddel
53 Getriebemotor
54 Förderschnecke
54' Getriebemotor
54" Trocknungsgutzufuhr
55 Förderschnecke
57 Siebboden
57` Sieb
58 Luftkammer
59 Trocknungswanne
59' Wand
60 Gehäuse / Container
d, d' Durchmesser
DW Druckwelle
FS Freistrahl
GDS Gasdruckstoß
PG Prozessgas
PGS Prozessgasstrom
REG Reingas
RGG Reinigungsgas
ROG Rohgas
s Strecke
SL Sekundärluft
TG Trocknungsgut
UL Umgebungsluft
VWB Verwirbelungsbereich
I-IV Verfahrensschritte

## Patentansprüche

1. Verfahren zur Reinigung eines Filtersystems (1) eines Trockners (2), wobei das Filtersystem (1) zumindest einen Schlauchfilter (10) aufweist, wobei zum Ablösen von Filtrationspartikeln (11), die an einer Rohgasseite (12) des Schlauchfilters (10) anhaften und die durch eine Filterung von Rohgas (ROG) mit einer relativen Feuchtigkeit von wenigstens 80 % erhalten werden, eine Reingasseite (13) des Schlauchfilters (10) mit einem Gasdruckstoß (GDS) beaufschlagt wird.

2. Verfahren nach Anspruch 1, wobei das Rohgas (ROG) eine relative Feuchtigkeit von etwa 85 %, vorzugsweise von etwa 90 %, bevorzugt von etwa 95 %, besonders bevorzugt von etwa 97 % oder mehr, hat.

3. Verfahren nach Anspruch 1 oder 2, wobei zur Erzeugung des Gasdruckstoßes (GDS) ein Reinigungsgas (RGG) derart in den Schlauchfilter (10) eingebracht wird, dass durch das einströmende Reinigungsgas (RGG) ein bestimmtes Volumen an Sekundärluft (SL) von außerhalb in den Schlauchfilter (10) eingeführt wird,
und/oder
wobei die Sekundärluft (SL) so in den Schlauchfilter (10) eingeführt und/oder so darin verwirbelt wird, dass die Reingasseite (13) zumindest bereichsweise mit einem Gasgemisch aus Sekundärluft (SL) und Reinigungsgas (RGG) beaufschlagt wird.

4. Verfahren zur Reinigung eines Filtersystems (1) eines Trockners (2), wobei das Filtersystem (1) zumindest einen Schlauchfilter (10) aufweist, wobei zum Ablösen von an einer Rohgasseite (12) des Schlauchfilters (10) anhaftenden Filtrationspartikeln (11) eine Reingasseite (13) des Schlauchfilters (10) mit einem Gasdruckstoß (GDS) beaufschlagt wird, vorzugsweise ein Verfahren nach einem der vorstehenden Ansprüche, wobei zur Erzeugung des Gasdruckstoßes (GDS) ein Reinigungsgas (RGG) in Form eines über eine definierte Strecke (s) außerhalb des Schlauchfilters (10) verlaufenden Freistrahls (FS) in den Schlauchfilter (10) eingebracht wird.

5. Verfahren nach Anspruch 4, wobei die definierte Strecke (s), die der Freistrahl (FS) außerhalb des Schlauchfilters (10) durchläuft, zumindest etwa 60 mm, vorzugsweise zumindest etwa 80 mm, bevorzugt zumindest etwa 90 mm, weiter bevorzugt zumindest etwa 100 mm, weiter bevorzugt zumindest etwa 110 mm, besonders bevorzugt zumindest etwa 120 mm, insbesondere etwa 128 mm, ist.

6. Verfahren nach Anspruch 4 oder 5, wobei ein Durchmesser (d) des Freistrahls (FS) beim Eintritt in den Schlauchfilter (10) im Wesentlichen gleich ist zu einem Durchmesser (d`) des Schlauchfilters (10), vorzugsweise etwa 30 % kleiner, bevorzugt etwa 50 % kleiner, besonders bevorzugt etwa 55 % kleiner.

7. Verfahren zur Trocknung eines Trocknungsguts (TG) mit zumindest den folgenden Schritten:
- Bereitstellen eines, vorzugsweise erwärmten, Prozessgases (PG) in Form eines Prozessgasstroms (PGS),
- Hindurchführen des Prozessgasstroms (PGS) durch ein zu trocknendes Trocknungsgut (TG), wobei ein mit Partikeln (17) angereichertes Rohgas (ROG) erhalten wird,
- Einbringen des Rohgases (ROG) in ein Filtersystem (1) eines Trockners (2) mit zumindest einem Schlauchfilter (10) derart, dass eine Rohgasseite (12) des Schlauchfilters (10) mit dem Rohgas (ROG) beaufschlagt wird, wobei das Rohgas (ROG) zur Filterung eine relative Feuchtigkeit von wenigstens 80 % hat, und
- intermittierendes Ablösen von an der Rohgasseite (12) anhaftenden Filtrationspartikeln (11) durch Beaufschlagen einer Reingasseite (13) des Schlauchfilters (10) mit einem Gasdruckstoß (GDS) in Abhängigkeit einer definierten Bedingung, vorzugsweise mittels eines Verfahrens gemäß einem der vorstehenden Ansprüche.

8. Verfahren nach einem der vorstehenden Ansprüche, wobei der Gasdruckstoß (GDS) in Abhängigkeit eines bestimmten Differenzdrucks zwischen der Rohgasseite (12) und der Reingasseite (13) des Schlauchfilters (10) erzeugt wird.

9. Filtersystem (1) für einen Trockner (2), wobei das Filtersystem (1) zumindest einen Schlauchfilter (10) aufweist, wobei das Filtersystem (1) so ausgebildet ist, dass zum Ablösen von Filtrationspartikeln (11), die an einer Rohgasseite (12) des Schlauchfilters (10) anhaften und die durch eine Filterung von Rohgas (ROG) mit einer relativen Feuchtigkeit von wenigstens 80 % erhalten werden, eine Reingasseite (13) des Schlauchfilters (10) mit einem Gasdruckstoß (GDS) beaufschlagt wird, vorzugsweise zur Verwendung in einem Verfahren nach einem der vorstehenden Ansprüche.

10. Filtersystem nach Anspruch 9, wobei der Schlauchfilter (10) eine Venturi-Düse (18) aufweist, die zumindest im Bereich einer Schlauchfilteröffnung (15) angeordnet ist, und/oder
wobei das Filtersystem (1) zumindest ein Injektionsrohr (20) mit zumindest einer Injektionsdüse (21) zum Einbringen eines Reinigungsgases (RGG) in den Schlauchfilter (10) aufweist.

11. Filtersystem nach Anspruch 9 oder 10, wobei das Filtersystem (1) zwei oder mehr Schlauchfilter (10) hat,
und/oder
wobei das Injektionsrohr (20) so ausgebildet ist, dass jeweils eine Injektionsdüse (21) einem bestimmten Schlauchfilter (10) zugeordnet ist,
und/oder
wobei das Filtersystem (1) zwei oder mehr, vorzugsweise separat steuerbare, Injektionsrohre (20) aufweist.

12. Filtersystem (1) für einen Trockner (2), wobei das Filtersystem (1) zumindest einen Schlauchfilter (10) aufweist, wobei das Filtersystem (1) so ausgebildet ist, dass zum Ablösen von an einer Rohgasseite (12) des Schlauchfilters (10) anhaftenden Filtrationspartikeln (11) eine Reingasseite (13) des Schlauchfilters (10) mit einem Gasdruckstoß (GDS) beaufschlagt wird, vorzugsweise ein Filtersystem (1) nach einem der vorstehenden Ansprüche 9 bis 11, wobei das Filtersystem (1) eine Injektionsdüse (21) aufweist, die von einer Schlauchfilteröffnung (15) beabstandet und dazu ausgebildet ist, um ein Reinigungsgas (RGG) in Form eines Freistrahls (FS) in den Schlauchfilter (10) einzubringen.

13. Filtersystem nach einem der Ansprüche 9 bis 12, wobei das Filtersystem (1) einen Drucksensor zur Bestimmung eines Differenzdrucks zwischen der Rohgasseite (12) und der Reingasseite (13) des Schlauchfilters (10) aufweist,
und/oder
wobei das Filtersystem (1) eine Steuereinheit (3) aufweist zur Steuerung einer Reinigung des Filtersystems (1), vorzugsweise in Abhängigkeit eines bestimmten Differenzdrucks, in einem automatisierten Prozess.

14. Trockner (2) mit zumindest den folgenden Baugruppen:
- eine Prozessgasbereitstellungseinheit (4) zum Bereitstellen eines, vorzugsweise erwärmten, Prozessgases (PG) in Form eines Prozessgasstroms (PGS),
- ein Trocknungsbehälter (5) zum Trocknen eines Trocknungsguts (TG),
- ein Filtersystem (1) nach einem der Ansprüche 9 bis 13,
wobei vorzugsweise zumindest eine Baugruppe (1, 4, 5) modular aufgebaut ist.

15. Trockner nach Anspruch 14, wobei der Trockner (2) zumindest eine der folgenden Komponenten aufweist:
- Wiegestäbe zur Halterung eines Aufnahmebereichs (59) für Trocknungsgut (TG) im Trocknungsbehälter (5),
- ein Rührwerk (50) im Trocknungsbehälter (5), vorzugsweise ein gegenläufiges Doppelrührwerk (50),
- eine, vorzugsweise hydraulische, Reinigungsvorrichtung für ein Sieb (57') zur Lagerung des Trocknungsguts (TG),
- ein Feuchtigkeitssensor für das Trocknungsgut (TG),
- eine Steuereinheit (3) zur Steuerung einer Trocknung von Trocknungsgut (TG) in dem Trockner (2) in einem automatisierten Prozess.
